# EUROPEAN PATENT APPLICATION

(11) **EP 4 650 240 A1**
(43) Date of publication of application: **19.11.2025**
(21) Application number: 25175439.6
(22) Date of filing: 09.05.2025
(51) Int. Cl.: B60W 50/08, B60W 50/10, B60W 50/14, B60W 60/00

(54) **PULLOVER LOCATION CHANGES FOR AUTONOMOUS VEHICLES**

(30) Priority: 13.05.2024 US 202418661958
(71) Applicant: Waymo LLC, Mountain View, CA 94043 (US)
(72) Inventor: MORSE, Reed, Mountain View, CA 94043 (US); ZHANG, Jessica, Mountain View, CA 94043 (US); VORA, Mishika, Mountain View, CA 94043 (US); TRINH, Connie, Mountain View, CA 94043 (US)
(74) Representative: Chettle, John Edward

(57) **Abstract**

Aspects of the disclosure provide for pullover location changes for autonomous vehicles. For instance, an autonomous vehicle may be controlled in an autonomous driving mode to stop at a pullover location. Whether a passenger should be provided with an option to trigger the autonomous vehicle to move from the pullover location to a new pullover location may be determined. While the vehicle is stopped at the pullover location and based on the determination, a signal may be sent in order to provide the option to the passenger, and while the vehicle is stopped at the pullover location, an indication that the passenger has selected the option is received. In response to receiving the indication, the vehicle may be controlled in the autonomous driving mode to a new pullover location.

## Description

### BACKGROUND

Autonomous vehicles for instance, vehicles that may not require a human driver, can be used to aid in the transport of passengers or items from one location to another. Such vehicles may operate in a fully autonomous mode where passengers may provide some initial input, such as a pickup or destination location, and the autonomous vehicle maneuvers itself to that location. Autonomous vehicles are equipped with various types of sensors in order to detect objects in the surroundings. For example, autonomous vehicles may include sonar, radar, camera, lidar, and other devices that scan, generate and/or record data about the autonomous vehicle's surroundings. This data may be combined with pre-stored map information in order to enable the autonomous vehicle to plan trajectories in order to maneuver itself through the surroundings.

In some instances, an autonomous vehicle will pullover and stop to pick up or drop off a passenger in a location that is inconvenient for the passenger to get into or out of an autonomous vehicle. This may occur even when the user has selected the pullover location during the trip (e.g., "told" the vehicle where to pullover). Examiners of such inconvenient locations may include where there is a puddle right outside the autonomous vehicle, heaving traffic, large crowds of people, or some object (e.g., a wall, vegetation, trash cans, debris, etc.) next to the autonomous vehicle that may make it difficult to open a door of the autonomous vehicle. Similarly, a passenger may require additional room to embark or disembark in certain situations, such as where the passenger may have packages or luggage to retrieve, a car seat to remove, etc.

### BRIEF SUMMARY

Aspects of the disclosure provide a method. The method includes controlling, by one or more processors, an autonomous vehicle in an autonomous driving mode to stop at a pullover location; determining, by the one or more processors, whether a passenger should be provided with an option to trigger the autonomous vehicle to move from the pullover location to a new pullover location; while the autonomous vehicle is stopped at the pullover location and based on the determining, sending, by the one or more processors, a signal in order to provide the option to the passenger; while the autonomous vehicle is stopped at the pullover location, receiving, by the one or more processors, an indication that the passenger has selected the option; and in response to receiving the indication, controlling, by the one or more processors, the autonomous vehicle in the autonomous driving mode to a new pullover location.

In one example, determining whether the passenger should be provided with the option occurs while the autonomous vehicle is stopped at the pullover location. In another example, determining whether the passenger should be provided with an option includes determining whether the autonomous vehicle is stopped at the pullover location in or within a predetermined distance of an area including certain types of roadway features. In this example, the certain types of roadway features include an intersection. In addition or alternatively, the certain types of roadway features include a bridge. In addition or alternatively, the certain types of roadway features include a tunnel. In addition or alternatively, the certain types of roadway features include railroad tracks. In another example, sending the signal causes the option to be displayed on a display of the autonomous vehicle when the passenger is inside of the autonomous vehicle. In another example, sending the signal causes the option to be displayed on a display of a client computing device of the passenger when the passenger is not inside the autonomous vehicle.

Another aspect of the disclosure provides a system comprising one or more processors. The one or more processors are configured to control an autonomous vehicle in an autonomous driving mode to stop at a pullover location; determine whether a passenger should be provided with an option to trigger the autonomous vehicle to move from the pullover location to a new pullover location; while the autonomous vehicle is stopped at the pullover location and based on the determining, send a signal in order to provide the option to the passenger; while the autonomous vehicle is stopped at the pullover location, receive an indication that the passenger has selected the option; and in response to receiving the indication, control the autonomous vehicle in the autonomous driving mode to a new pullover location.

In one example, the one or more processors are further configured to determine whether the passenger should be provided with the option occurs while the autonomous vehicle is stopped at the pullover location. In another example, the one or more processors are further configured to determine whether the passenger should be provided with an option by determining whether the autonomous vehicle is stopped at the pullover location in or within a predetermined distance of an area including certain types of roadway features. In this example, the certain types of roadway features include an intersection. In addition or alternatively, the certain types of roadway features include a bridge. In addition or alternatively, the certain types of roadway features include a tunnel. In addition or alternatively, the certain types of roadway features include railroad tracks. In another example, the one or more processors are further configured to send the signal and thereby cause the option to be displayed on a display of the autonomous vehicle when the passenger is inside of the autonomous vehicle. In another example, the one or more processors are further configured to send the signal and thereby cause the option to be displayed on a display of a client computing device of the passenger when the passenger is not inside the autonomous vehicle. In another example, the system also includes the autonomous vehicle.

### BRIEF DESCRIPTION OF THE DRAWINGS

FIGURE 1 is a functional diagram of an example vehicle in accordance with an exemplary embodiment.
FIGURE 2A-2B are an example of map information in accordance with aspects of the disclosure.
FIGURE 3A-3B are example external views of a vehicle in accordance with aspects of the disclosure.
FIGURE 4 is a pictorial diagram of an example system in accordance with aspects of the disclosure.
FIGURE 5 is a functional diagram of the system of FIGURE 4 in accordance with aspects of the disclosure.
FIGURE 6 is an example of a geographic area and a marker representative of a destination location in accordance with aspects of the disclosure.
FIGURE 7 is an example of a geographic area, a marker representative of a destination location, and a route in accordance with aspects of the disclosure.
FIGURE 8 is an example of a geographic area, a marker representative of a destination location, and a baseline in accordance with aspects of the disclosure.

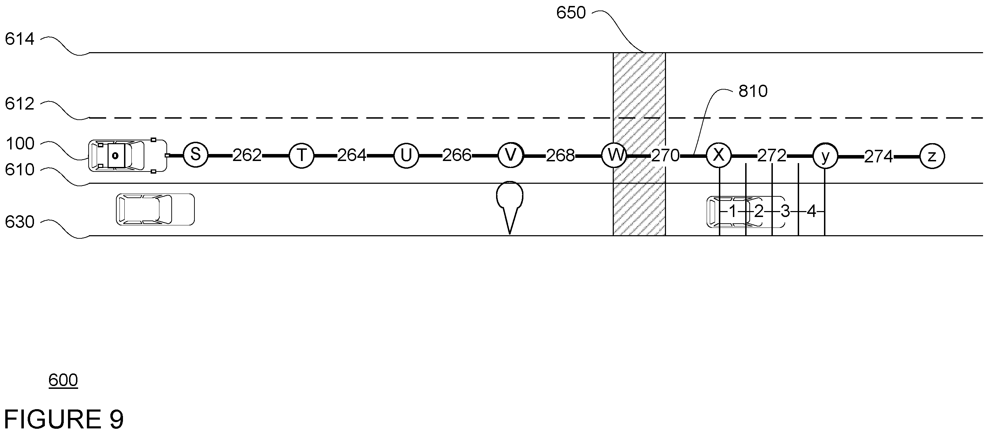

FIGURE 9 is an example of a geographic area, a marker representative of a destination location, a baseline, and splices in accordance with aspects of the disclosure.
FIGURE 10 is an example of a geographic area, a marker representative of a destination location, a baseline, and various areas in accordance with aspects of the disclosure.
FIGURE 11 is an example of a geographic area, a marker representative of a destination location, a baseline, various areas, and a set of potential pullover locations in accordance with aspects of the disclosure.
FIGURE 12 is an example of a geographic area, a marker representative of a destination location, a baseline, various areas, and a set of potential pullover locations in accordance with aspects of the disclosure.
FIGURE 13 is an example of a geographic area, a marker representative of a destination location, a route, and a pullover location in accordance with aspects of the disclosure.
FIGURE 14 is an example of a geographic area in accordance with aspects of the disclosure.
FIGURE 15 is an example screen display and client computing device in accordance with aspects of the disclosure.
FIGURE 16 is an example screen display and client computing device in accordance with aspects of the disclosure.
FIGURE 17 is an example of a geographic area, a marker representative of a destination location, and potential pullover locations in accordance with aspects of the disclosure.
FIGURE 18 is an example of a geographic area, a marker representative of a destination location, a route, and a pullover location in accordance with aspects of the disclosure.
FIGURE 19 is an example of a geographic area, a marker representative of a destination location, and a pullover location in accordance with aspects of the disclosure.
FIGURE 20 is an example flow diagram in accordance with aspects of the disclosure.

### DETAILED DESCRIPTION

### OVERVIEW

The technology relates to enabling a passenger of an autonomous vehicle to change a pullover location of the autonomous vehicle. In some instances, an autonomous vehicle will pullover and stop to pick up or drop off a passenger in a location that is inconvenient for the passenger to get into or out of an autonomous vehicle. This may occur even when the user has selected the pullover location during the trip (e.g., "told" the vehicle where to pullover). Examiners of such inconvenient locations may include where there is a puddle right outside the autonomous vehicle, heaving traffic, large crowds of people, or some object (e.g., a wall, vegetation, trash cans, debris, etc.) next to the autonomous vehicle that may make it difficult to open a door of the autonomous vehicle. Similarly, a passenger may require additional room to disembark in certain situations, such as where the passenger may have packages or luggage to retrieve, a car seat to remove, etc. To address this, a passenger may be provided with an option to trigger the autonomous vehicle to move to a new location and allow the passenger to embark or disembark the autonomous vehicle.

Some systems may enable an autonomous vehicle to "move along" if its current pullover location is impeding other road users. For example, if the computing devices of the autonomous vehicle determine that it is impeding another road user, this may be used to send a move along request to a remote computing device. Of course this other road user may need to be close to the autonomous vehicle to avoid false positive situations.

For example, an autonomous vehicle may be determined to be impeding another road user when the pullover location of the autonomous vehicle would prevent the other road user from passing or driving around the autonomous vehicle or rather is causing an "impassable situation" for more than some predetermined period of time. In such situations, the autonomous vehicle may differentiate between certain types of vehicles. For instance, the predetermined periods of time may differ for different types of vehicles. Again, once the autonomous vehicle is determined to be impeding the other road user, the computing devices may send the move along request.

In some instances, the remote computing device may be manned by a human operator who is able to review the situation, e.g., by reviewing camera images or other sensor data captured by the autonomous vehicle and confirming that the autonomous vehicle should move from its current pullover location. The remote computing device may then send a move along signal to the autonomous vehicle causing the autonomous vehicle to move from its current pullover location. In other instances, the remote computing device may "auto-answer" certain requests, that is respond with a move along signal without waiting for a human operator to review the situation and confirm.

In response to receiving the move along signal, the computing devices of the autonomous vehicle may search for a new pullover location along the autonomous vehicle's current route that is at least some predetermined distance from the current pullover location . This may involve conducting a search of map information which loops around past the current pullover location. However, this new search may result in a failed pullover flag (as discussed further below) or a new pullover location that is far away from the destination. Moreover, this approach does not take into consideration the needs of the passenger, only those of other road users.

In some instances, when faced with an inconvenient pullover location, a passenger may attempt to change the pullover location, for example, by moving a destination marker (e.g., representative of a pickup, intermediate drop off, or final drop off location for the passenger) with respect to a map or requesting assistance from a human operator. Typically moving the location of a destination marker may require very large changes (e.g. a city block or two) before the trip has ended (e.g., the autonomous vehicle is still driving) in order for the autonomous vehicle to actually move to a new pullover location. Similarly, requesting assistance from a human operator may require establishing communication with a remote computing device and some back and forth between the passenger and the human operator, as well as the human operator setting a new destination for the autonomous vehicle, which may cause unnecessary delays and annoyance to the passenger.

To address these deficiencies, as noted above, a passenger may be provided with an option to trigger the autonomous vehicle to move to a new pullover location and allow the passenger to embark or disembark the autonomous vehicle. Before providing the passenger with the option, the computing devices of the autonomous vehicle may first determine whether the passenger should be provided with the option.

In this regard, the computing devices of the autonomous vehicle may determine whether the autonomous vehicle is stopped in an area where it is possible to pull out and pull over again safely. For instance, providing the option may not be appropriate when the autonomous vehicle is located on or is approaching roadway features. If not, then the computing devices may determine that the autonomous vehicle is able to pull over in another location and may thus provide the option to the passenger.

In addition or alternatively, the computing devices of the autonomous vehicle may determine whether the autonomous vehicle is able to pull over in another location. This may involve reviewing previously identified potential pullover locations. For instance, a routing system of the autonomous vehicle may search along a route to the destination and identify a set of potential pullover locations. This set of potential pullover locations may then be set to a planning system of the autonomous vehicle for evaluation and selection of the pullover location. A pullover location may then be selected from the set of potential pullover locations based on a plurality of different factors which can be converted to costs and evaluated to identify the potential pullover location with the lowest cost.

Once stopped in the selected pullover location, the computing devices may determine whether any of the other potential pullover locations of the set are feasible locations for pulling over the autonomous vehicle. If so, then the computing devices may determine that the autonomous vehicle is able to pull over in another location and may thus provide the option to the passenger. If not, then the computing devices may determine that the autonomous vehicle is not able to pull over in another location and may thus not provide the option to the passenger.

Alternatively, rather than reviewing previously identified candidate locations, the routing system of the autonomous vehicle may be used to determine a new route to the original destination of the autonomous vehicle and search for pullover locations along that route. These potential pullover locations may then be set to a planning system of the autonomous vehicle for evaluation to determine whether to provide the option to the passenger.

The option may be provided to the passenger in various ways. For instance, this option may be displayed at a client computing device and/or on a display of the autonomous vehicle. For example, if the autonomous vehicle is stopped at a pickup location, the option may be provided to and displayed at the passenger's client computing device. If the autonomous vehicle is stopped at a drop off location, the option may be provided to and displayed at the passenger's client computing device and/or a display of the autonomous vehicle.

The passenger may then provide user input selecting the option, either in the autonomous vehicle and/or on the passenger's client computing device which causes a signal to be sent to the computing devices of the autonomous vehicle. The computing devices may then use this signal to identify and move from its current pullover location to a new pullover location. As noted above, this new pullover location may be selected from a prior set of potential pullover locations, for example, using a cost analysis. In some instances, the new pullover location need not be located some predetermined distance from the current pullover location, and the computing devices may conduct a search within a predetermined distance to find a new pullover location. Alternatively, the new pullover location may be some fixed distance s away from the current pullover location or at least some predetermined distance away from the current pullover location. In other instances, the passenger may be provided with an option or options to select how far the distance to the new pullover location should be.

The new pullover location may be set as the destination of the autonomous vehicle, and the computing devices may control the autonomous vehicle to stop in the new pullover location. Once there, the passenger may embark or disembark. In some instances, if the autonomous vehicle is not able to actually generate a trajectory that will enable the autonomous vehicle to reach the new pullover location, the computing devices may perform the move along response by searching for a new pullover location along the autonomous vehicle's current route that is at least some predetermined distance from the current pullover location as described above. While this may result in the autonomous vehicle driving past the original destination (which may be considered a failed pullover) and a longer walk for the passenger, the result may still be a safer pullover location and an improved experience for the passenger.

The features described herein may enable passengers of an autonomous vehicle to change a pullover location of the autonomous vehicle. In some instances, the features described herein may allow passengers to respond to temporary inconveniences or blockages such as puddles, crowds of people, etc. in real time, rather than requiring the passenger to choose the pullover location before the autonomous vehicle has stopped. This may improve the convenience of pullover locations for passengers and improve overall ridership.

### EXAMPLE SYSTEMS

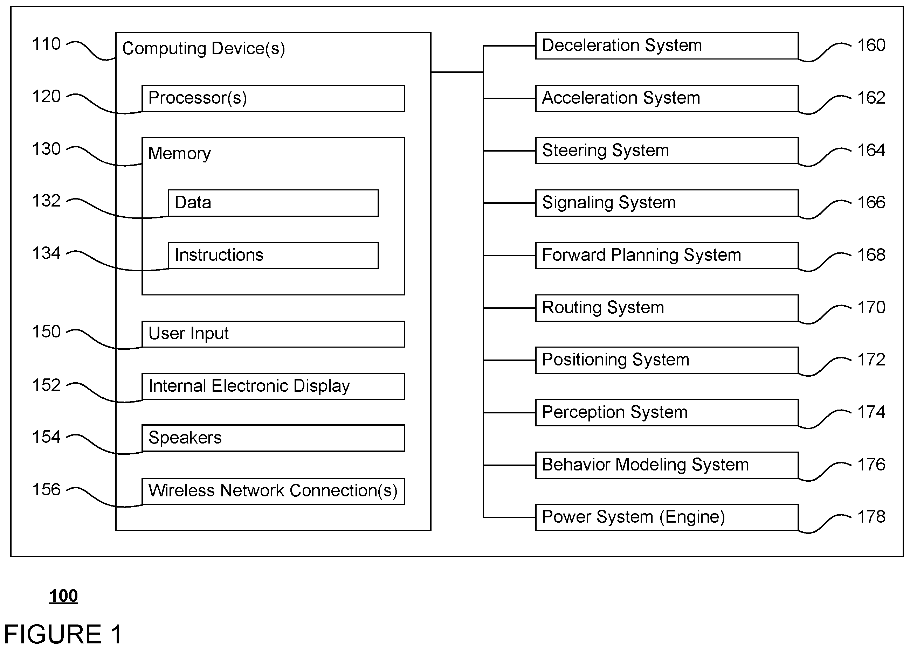

As shown in FIGURE 1, an autonomous vehicle 100 in accordance with one aspect of the disclosure includes various components. Vehicles, such as those described herein, may be configured to operate in one or more different driving modes. For instance, in a manual driving mode, a driver may directly control acceleration, deceleration, and steering via inputs such as an accelerator pedal, a brake pedal, a steering wheel, etc. A vehicle may also operate in one or more autonomous driving modes including, for example, a semi or partially autonomous driving mode in which a person exercises some amount of direct or remote control over driving operations, or a fully autonomous driving mode in which the autonomous vehicle handles the driving operations without direct or remote control by a person. These vehicles may be known by different names including, for example, autonomously driven vehicles, self-driving vehicles, and so on.

The U.S. National Highway Traffic Safety Administration (NHTSA) and the Society of Automotive Engineers (SAE) have each identified different levels to indicate how much, or how little, a vehicle controls the driving, although different organizations may categorize the levels differently. Moreover, such classifications may change (e.g., be updated) overtime.

As described herein, in a semi or partially autonomous driving mode, even though the autonomous vehicle assists with one or more driving operations (e.g., steering, braking and/or accelerating to perform lane centering, adaptive cruise control or emergency braking), the human driver is expected to be situationally aware of the autonomous vehicle's surroundings and supervise the assisted driving operations. Here, even though the autonomous vehicle may perform all driving tasks in certain situations, the human driver is expected to be responsible for taking control as needed.

In contrast, in a fully autonomous driving mode, the control system of the autonomous vehicle performs all driving tasks and monitors the driving environment. This may be limited to certain situations such as operating in a particular service region or under certain time or environmental restrictions, or may encompass driving under all conditions without limitation. In a fully autonomous driving mode, a person is not expected to take over control of any driving operation.

Unless indicated otherwise, the architectures, components, systems and methods described herein can function in a semi or partially autonomous driving mode, or a fully-autonomous driving mode.

While certain aspects of the disclosure are particularly useful in connection with specific types of vehicles, the autonomous vehicle may be any type of vehicle including, but not limited to, cars, trucks (e.g. garbage trucks, tractor-trailers, pickup trucks, etc.), motorcycles, buses, recreational vehicles, street cleaning or sweeping vehicles, etc. The autonomous vehicle may have one or more computing devices, such as computing device 110 containing one or more processors 120, memory 130 and other components typically present in general purpose computing devices.

The memory 130 stores information accessible by the one or more processors 120, including data 132 and instructions 134 that may be executed or otherwise used by the processor 120. The memory 130 may be of any type capable of storing information accessible by the processor, including a computing device or computer-readable medium, or other medium that stores data that may be read with the aid of an electronic device, such as a hard-drive, memory card, ROM, RAM, DVD or other optical disks, as well as other write-capable and read-only memories. Systems and methods may include different combinations of the foregoing, whereby different portions of the instructions and data are stored on different types of media.

The instructions 134 may be any set of instructions to be executed directly (such as machine code) or indirectly (such as scripts) by the processor. For example, the instructions may be stored as computing device code on the computing device-readable medium. In that regard, the terms "instructions" and "programs" may be used interchangeably herein. The instructions may be stored in object code format for direct processing by the processor, or in any other computing device language including scripts or collections of independent source code modules that are interpreted on demand or compiled in advance. Functions, methods and routines of the instructions are explained in more detail below.

The data 132 may be retrieved, stored or modified by processor 120 in accordance with the instructions 134. For instance, although the claimed subject matter is not limited by any particular data structure, the data may be stored in computing device registers, in a relational database as a table having a plurality of different fields and records, XML documents or flat files. The data may also be formatted in any computing device-readable format.

The one or more processors 120 may be any conventional processors, such as commercially available CPUs or GPUs. Alternatively, the one or more processors may include a dedicated device such as an ASIC or other hardware-based processor. Although FIGURE 1 functionally illustrates the processor, memory, and other elements of computing device 110 as being within the same block, it will be understood by those of ordinary skill in the art that the processor, computing device, or memory may actually include multiple processors, computing devices, or memories that may or may not be stored within the same physical housing. For example, memory may be a hard drive or other storage media located in a housing different from that of computing device 110. Accordingly, references to a processor or computing device will be understood to include references to a collection of processors or computing devices or memories that may or may not operate in parallel.

Computing devices 110 may include all of the components normally used in connection with a computing device such as the processor and memory described above as well as a user input 150 (e.g., one or more of a button, mouse, keyboard, touch screen and/or microphone), various electronic displays (e.g., a monitor having a screen or any other electrical device that is operable to display information), and speakers 154 to provide information to a passenger of the autonomous vehicle 100 or others as needed. For example, electronic display 152 may be located within a cabin of autonomous vehicle 100 and may be used by computing devices 110 to provide information to passengers within the autonomous vehicle 100.

Computing devices 110 may also include one or more wireless network connections 156 to facilitate communication with other computing devices, such as the client computing devices and server computing devices described in detail below. The wireless network connections may include short range communication protocols such as Bluetooth, Bluetooth low energy (LE), cellular connections, as well as various configurations and protocols including the Internet, World Wide Web, intranets, virtual private networks, wide area networks, local networks, private networks using communication protocols proprietary to one or more companies, Ethernet, WiFi and HTTP, and various combinations of the foregoing.

Computing devices 110 may be part of an autonomous control system for the autonomous vehicle 100 and may be capable of communicating with various components of the autonomous vehicle in order to control the autonomous vehicle in an autonomous driving mode. For example, returning to FIGURE 1, computing devices 110 may be in communication with various systems of autonomous vehicle 100, such as deceleration system 160, acceleration system 162, steering system 164, signaling system 166, planning system 168, routing system 170, positioning system 172, perception system 174, behavior modeling system 176, and power system 178 in order to control the movement, speed, etc. of autonomous vehicle 100 in accordance with the instructions 134 of memory 130 in the autonomous driving mode.

As an example, computing devices 110 may interact with deceleration system 160 and acceleration system 162 in order to control the speed of the autonomous vehicle. Similarly, steering system 164 may be used by computing devices 110 in order to control the direction of autonomous vehicle 100. For example, if autonomous vehicle 100 is configured for use on a road, such as a car or truck, steering system 164 may include components to control the angle of wheels to turn the autonomous vehicle. Computing devices 110 may also use the signaling system 166 in order to signal the autonomous vehicle's intent to other drivers or vehicles, for example, by lighting turn signals or brake lights when needed.

Routing system 170 may be used by computing devices 110 in order to generate a route to a destination using map information. Planning system 168 may be used by computing device 110 in order to generate short-term trajectories that allow the autonomous vehicle to follow routes generated by the routing system. In this regard, the planning system 168 and/or routing system 166 may store detailed map information, e.g., pre-stored, highly detailed maps identifying a road network including the shape and elevation of roadways, lane lines, intersections, crosswalks, speed limits, traffic signals, buildings, signs, real time traffic information (updated as received from a remote computing device), pullover spots, vegetation, or other such objects and information.

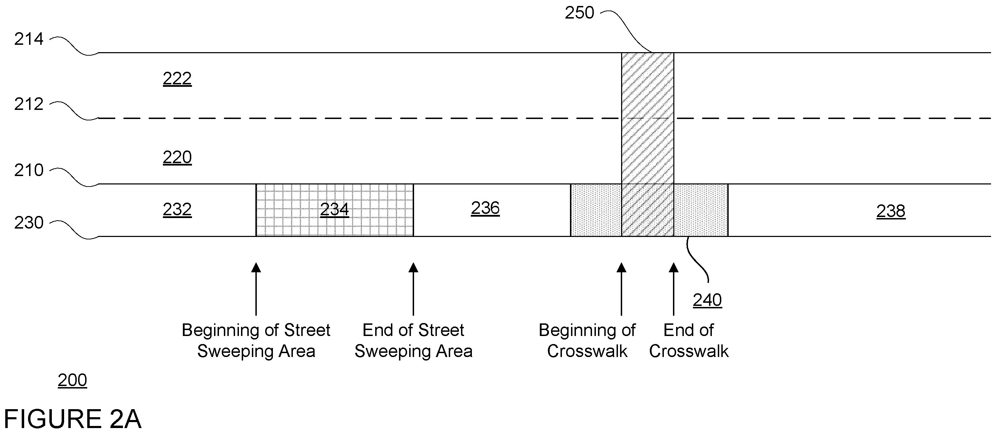

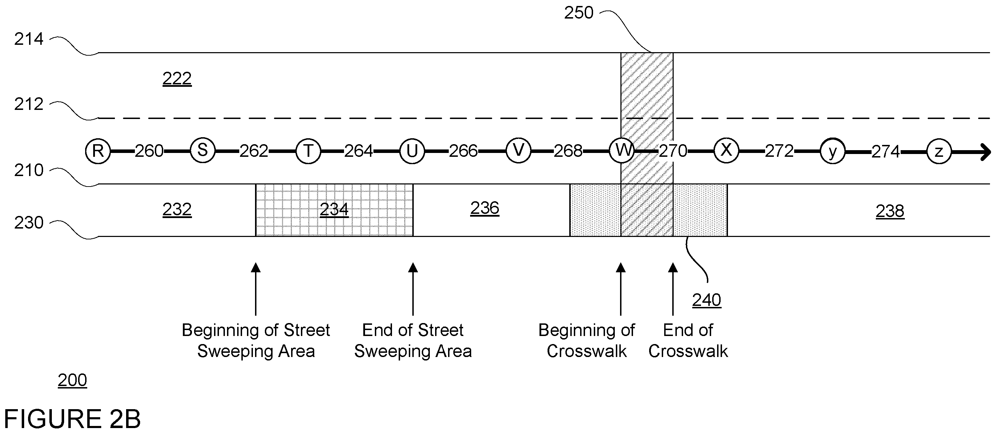

FIGURES 2A and 2B are an example of map information 200 for a small section of roadway. FIGURE 2A depicts a portion of the map information 200 that includes information identifying the shape, location, and other characteristics of lane markers or lane lines 210, 212, 214, which define lanes 220, 222. The map information also identifies the shape, location, and other characteristics of shoulder area 232 and curb 230 adjacent to shoulder area. In addition to the aforementioned features and information, the map information may also include information that identifies the direction of traffic for each lane as well as information that allows the computing devices 110 to determine whether the vehicle has the right of way to complete a particular maneuver (i.e. complete a turn or cross a lane of traffic or intersection).

In addition to the aforementioned physical feature information, the map information may include a plurality of graph nodes and edges representing road or lane segments that together make up the road network of the map information. Each edge is defined by a starting graph node having a specific geographic location (e.g. latitude, longitude, altitude, etc.), an ending graph node having a specific geographic location (e.g. latitude, longitude, altitude, etc.), and a direction. This direction may refer to a direction the autonomous vehicle 100 must be moving in in order to follow the edge (i.e. a direction of traffic flow). The graph nodes may be located at fixed or variable distances. For instance, the spacing of the graph nodes may range from a few centimeters to a few meters and may correspond to the speed limit of a road on which the graph node is located. In this regard, greater speeds may correspond to greater distances between graph nodes. The edges may represent driving along the same lane or changing lanes. Each node and edge may have a unique identifier, such as a latitude and longitude location of the node or starting and ending locations or nodes of an edge. In addition to nodes and edges, the map may identify additional information such as types of maneuvers required at different edges as well as which lanes are drivable. For example, FIGURE 2B depicts a plurality of nodes s, t, u, v, w, x, y, z, and edges 260, 262, 264, 266, 268, 270, 272 which extend between pairs of such nodes. For example, edge 260 extends between nodes s (starting node of edge 260) and t (ending node of edge 260), edge 262 extends between nodes t (starting node of edge 262) and u (ending node of edge 262), and so on.

The map information may also identify, for instance, include flags or labels for, regions of interest. A region of interest may represent an area where a vehicle (any vehicle) could potentially stop or park whether or not the vehicle should park or stop for an extended period of time or even at all. In this regard, there may be a plurality of different types of regions of interest such as public or private parking lots, individual (e.g. designated) parking spaces, disability parking spaces, motorcycle parking, taxi lines or zones, commercial loading or unloading zones, street sweeping areas, funeral zones, certain types of road surfaces (e.g. dirt, gravel, beaches), adjacent to or in residential driveways, adjacent to mailboxes, adjacent to or in commercial driveways, alternative fuel stations, yellow curbs, red curbs, adjacent to wheelchair access ramps, no stopping or standing zones, bus lanes or stops, crosswalks, fire lanes, adjacent to fire hydrants, railroad tracks, etc. For example, returning to FIGURE 2B, the map information 200 also includes information identifying the shape, location, beginning location, end location, and other characteristics of regions of interest such as a crosswalk 250 as well as a street sweeping area 234.

The routing system 166 may use the aforementioned map information to determine a route from a current location (e.g. a location of a current node) to a destination. Routes may be generated using a cost-based analysis which attempts to select a route to the destination with the lowest cost. Costs may be assessed in any number of ways such as time to the destination, distance traveled (each edge may be associated with a cost to traverse that edge), types of maneuvers required, convenience to passengers or the autonomous vehicle, etc. Each route may include a list of a plurality of nodes and edges which the autonomous vehicle can use to reach the destination. Routes may be recomputed periodically as the autonomous vehicle travels to the destination.

The map information used for routing may be the same or a different map as that used for planning trajectories. For example, the map information used for planning routes not only requires information on individual lanes, but also the nature of lane boundaries (e.g., solid white, dash white, solid yellow, etc.) to determine where lane changes are allowed. However, unlike the map used for planning trajectories, the map information used for routing need not include other details such as the locations of crosswalks, traffic lights, stop signs, etc., though some of this information may be useful for routing purposes. For example, between a route with a large number of intersections with traffic controls (such as stop signs or traffic signal lights) versus one with no or very few traffic controls, the latter route may have a lower cost (e.g. because it is faster) and therefore be preferable.

Positioning system 170 may be used by computing devices 110 in order to determine the autonomous vehicle's relative or absolute position on a map or on the earth. For example, the positioning system 170 may include a GPS receiver to determine the device's latitude, longitude and/or altitude position. Other location systems such as laser-based localization systems, inertial-aided GPS, or camera-based localization may also be used to identify the location of the autonomous vehicle. The location of the autonomous vehicle may include an absolute geographical location, such as latitude, longitude, and altitude, a location of a node or edge of the roadgraph as well as relative location information, such as location relative to other cars immediately around it, which can often be determined with less noise than the absolute geographical location.

The positioning system 172 may also include other devices in communication with computing devices 110, such as an accelerometer, gyroscope or another direction/speed detection device to determine the direction and speed of the autonomous vehicle or changes thereto. By way of example only, an acceleration device may determine its pitch, yaw or roll (or changes thereto) relative to the direction of gravity or a plane perpendicular thereto. The device may also track increases or decreases in speed and the direction of such changes. The device's provision of location and orientation data as set forth herein may be provided automatically to the computing device 110, other computing devices and combinations of the foregoing.

The perception system 174 also includes one or more components for detecting objects external to the autonomous vehicle such as other road users (vehicles, pedestrians, bicyclists, etc.) obstacles in the roadway, traffic signals, signs, trees, buildings, etc. For example, the perception system 174 may include Lidars, sonar, radar, cameras, microphones and/or any other detection devices that generate and/or record data which may be processed by the computing devices of computing devices 110. In the case where the autonomous vehicle is a passenger vehicle such as a minivan or car, the autonomous vehicle may include Lidar, cameras, and/or other sensors mounted on or near the roof, fenders, bumpers or other convenient locations.

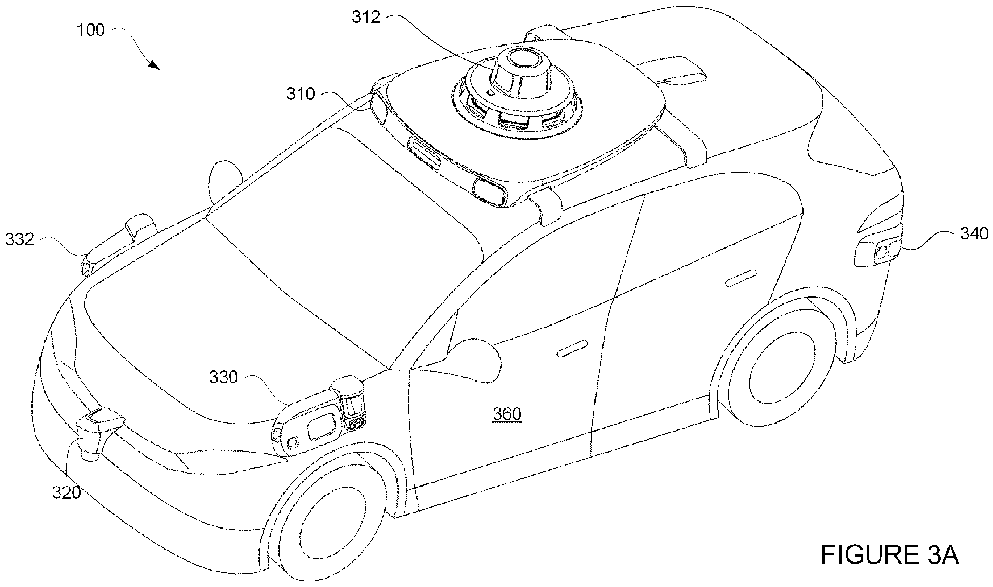

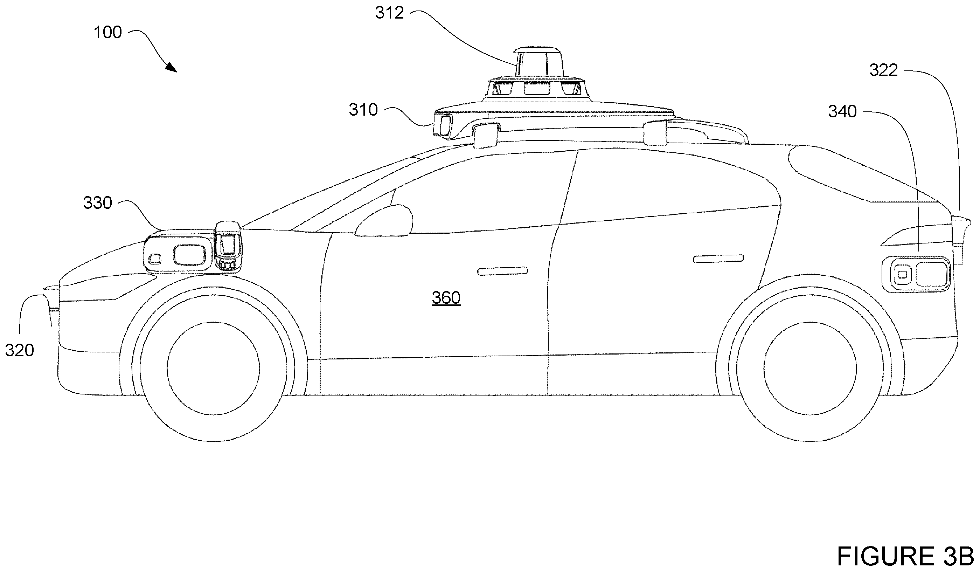

For instance, FIGURES 3A-3B are an example external views of autonomous vehicle 100. In this example, roof-top housing 310 and upper housing 312 may include a LIDAR sensor as well as various cameras and radar units. Upper housing 312 may include any number of different shapes, such as domes, cylinders, "cake-top" shapes, etc. In addition, housing 320, 322 (shown in FIGURE 3B) located at the front and rear ends of autonomous vehicle 100 and housings 330, 332 on the driver's and passenger's sides of the autonomous vehicle may each store a Lidar sensor and, in some instances, one or more cameras. For example, housing 330 is located in front of driver door 360. Autonomous vehicle 100 also includes a housing 340 for radar units and/or cameras located on the driver's side of the autonomous vehicle 100 proximate to the rear fender and rear bumper of autonomous vehicle 100. Another corresponding housing (not shown may also be arranged at the corresponding location on the passenger's side of the autonomous vehicle 100. Additional radar units and cameras (not shown) may be located at the front and rear ends of autonomous vehicle 100 and/or on other positions along the roof or roof-top housing 310.

Computing devices 110 may be capable of communicating with various components of the autonomous vehicle in order to control the movement of autonomous vehicle 100 according to primary vehicle control code of memory of computing devices 110. For example, returning to FIGURE 1, computing devices 110 may include various computing devices in communication with various systems of autonomous vehicle 100, such as deceleration system 160, acceleration system 162, steering system 164, signaling system 166, forward planning system 168, routing system 170, positioning system 172, perception system 174, behavior modeling system 176, and power system 178 (i.e. the autonomous vehicle's engine or motor) in order to control the movement, speed, etc. of autonomous vehicle 100 in accordance with the instructions 134 of memory 130.

The various systems of the autonomous vehicle may function using autonomous vehicle control software in order to determine how to control the autonomous vehicle. As an example, a perception system software module of the perception system 174 may use sensor data generated by one or more sensors of an autonomous vehicle, such as cameras, Lidar sensors, radar units, sonar units, etc., to detect and identify objects and their characteristics. These characteristics may include location, type, heading, orientation, speed, acceleration, change in acceleration, size, shape, etc.

In some instances, characteristics may be input into a behavior prediction system software module of the behavior modeling system 176 which uses various behavior models based on object type to output one or more behavior predictions or predicted trajectories for a detected object to follow into the future (e.g. future behavior predictions or predicted future trajectories). In this regard, different models may be used for different types of objects, such as pedestrians, bicyclists, vehicles, etc. The behavior predictions or predicted trajectories may be a list of positions and orientations or headings (e.g. poses) as well as other predicted characteristics such as speed, acceleration or deceleration, rate of change of acceleration or deceleration, etc.

In other instances, the characteristics from the perception system 174 may be put into one or more detection system software modules, such as a traffic light detection system software module configured to detect the states of known traffic signals, construction zone detection system software module configured to detect construction zones from sensor data generated by the one or more sensors of the autonomous vehicle as well as an emergency vehicle detection system configured to detect emergency vehicles from sensor data generated by sensors of the autonomous vehicle. Each of these detection system software modules may use various models to output a likelihood of a construction zone or an object being an emergency vehicle.

Detected objects, predicted trajectories, various likelihoods from detection system software modules, the map information identifying the autonomous vehicle's environment, position information from the positioning system 170 identifying the location and orientation of the autonomous vehicle, a destination location or node for the autonomous vehicle as well as feedback from various other systems of the autonomous vehicle may be input into a planning system software module of the planning system 168. The planning system 168 may use this input to generate planned trajectories for the autonomous vehicle to follow for some brief period of time into the future based on a route generated by a routing module of the routing system 170. Each planned trajectory may provide a planned path and other instructions for an autonomous vehicle to follow for some brief period of time into the future, such as 10 seconds or more or less. In this regard, the trajectories may define the specific characteristics of acceleration, deceleration, speed, direction, etc. to allow the autonomous vehicle to follow the route towards reaching a destination. A control system software module of computing devices 110 may be configured to control movement of the autonomous vehicle, for instance by controlling braking, acceleration and steering of the autonomous vehicle, in order to follow a trajectory.

The computing devices 110 may control the autonomous vehicle in one or more of the autonomous driving modes by controlling various components. For instance, by way of example, computing devices 110 may navigate the autonomous vehicle to a destination location completely autonomously using data from the detailed map information and planning system 168. Computing devices 110 may use the positioning system 170 to determine the autonomous vehicle's location and perception system 174 to detect and respond to objects when needed to reach the location safely. Again, in order to do so, computing device 110 and/or planning system 168 may generate trajectories and cause the autonomous vehicle to follow these trajectories, for instance, by causing the autonomous vehicle to accelerate (e.g., by supplying fuel or other energy to the engine or power system 178 by acceleration system 162), decelerate (e.g., by decreasing the fuel supplied to the engine or power system 178, changing gears, and/or by applying brakes by deceleration system 160), change direction (e.g., by turning the front or rear wheels of autonomous vehicle 100 by steering system 164), and signal such changes (e.g., by lighting turn signals) using the signaling system 166. Thus, the acceleration system 162 and deceleration system 160 may be a part of a drivetrain that includes various components between an engine of the autonomous vehicle and the wheels of the autonomous vehicle. Again, by controlling these systems, computing devices 110 may also control the drivetrain of the autonomous vehicle in order to maneuver the autonomous vehicle autonomously.

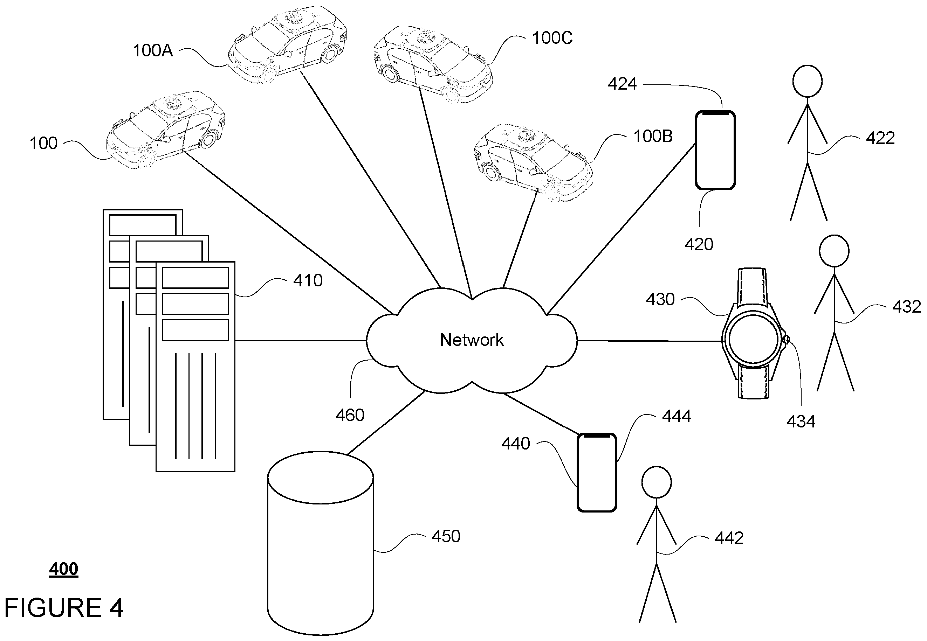

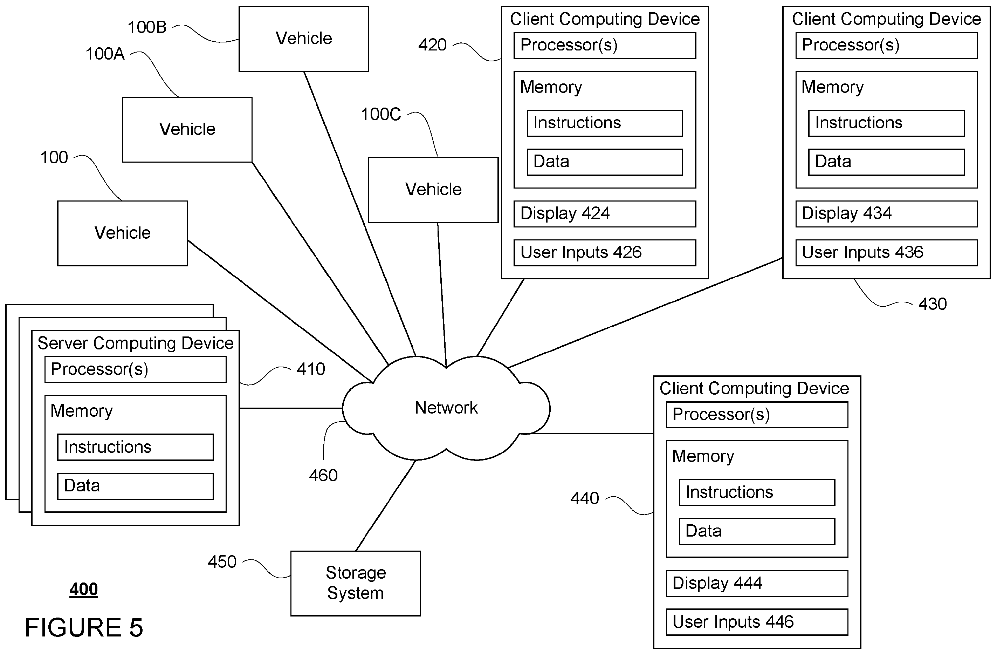

Computing device 110 of autonomous vehicle 100 may also receive or transfer information to and from other computing devices, such as those computing devices that are a part of the transportation service as well as other computing devices. FIGURES 4 and 5 are pictorial and functional diagrams, respectively, of an example system 400 that includes a plurality of computing devices 410, 420, 430, 440 and a storage system 450 connected via a network 460. System 400 also includes autonomous vehicles 100A, 100B and 100C, which may be configured the same as or similarly to autonomous vehicle 100. Although only a few vehicles and computing devices are depicted for simplicity, a typical system may include significantly more.

As shown in FIGURE 5, each of computing devices 410, 420, 430, 440 may include one or more processors, memory, data and instructions. Such processors, memories, data and instructions may be configured similarly to one or more processors 120, memory 130, data 132, and instructions 134 of computing device 110.

The network 460, and intervening nodes, may include various configurations and protocols including short range communication protocols such as Bluetooth, Bluetooth LE, the Internet, World Wide Web, intranets, virtual private networks, wide area networks, local networks, private networks using communication protocols proprietary to one or more companies, Ethernet, WiFi and HTTP, and various combinations of the foregoing. Such communication may be facilitated by any device capable of transmitting data to and from other computing devices, such as modems and wireless interfaces.

In one example, one or more computing devices 410 may include one or more server computing devices having a plurality of computing devices, e.g., a load balanced server farm, that exchange information with different nodes of a network for the purpose of receiving, processing and transmitting the data to and from other computing devices. For instance, one or more computing devices 410 may include one or more server computing devices that are capable of communicating with computing device 110 of autonomous vehicle 100 or a similar computing device of autonomous vehicle 100A, 100B, 100C as well as computing devices 420, 430, 440 via the network 460. For example, autonomous vehicles 100, 100A, 100B, 100C may be a part of a fleet of vehicles that can be dispatched by server computing devices to various locations.

In this regard, the server computing devices 410 may function as a fleet management system which can be used to track the status of autonomous vehicles of the fleet and arrange trips for passengers by assigning and dispatching vehicles such as autonomous vehicles 100, 100A, 100B, 100C. These assignments may include scheduling trips to different locations in order to pick up and drop off those passengers. In this regard, the server computing devices 410 may operate using scheduling system software in order to manage the aforementioned autonomous vehicle scheduling and dispatching. In addition, the computing devices 410 may use network 460 to transmit and present information to a user, such as user 422, 432, 442 on a display, such as displays 424, 434, 444 of computing devices 420, 430, 440. In this regard, computing devices 420, 430, 440 may be considered client computing devices.

As shown in FIGURE 3, each client computing device 420, 430 may be a personal computing device intended for use by a user 422, 432 and have all of the components normally used in connection with a personal computing device including a one or more processors (e.g., a central processing unit (CPU)), memory (e.g., RAM and internal hard drives) storing data and instructions, a display such as displays 424, 434, 444 (e.g., a monitor having a screen, a touch-screen, a projector, a television, or other device that is operable to display information), and user input devices 426, 436, 446 (e.g., a mouse, keyboard, touchscreen or microphone). The client computing devices may also include a camera for recording video streams, speakers, a network interface device, and all of the components used for connecting these elements to one another.

Although the client computing devices 420, 430 may each comprise a full-sized personal computing device, they may alternatively comprise mobile computing devices capable of wirelessly exchanging data with a server over a network such as the Internet. By way of example only, client computing device 420 may be a mobile phone or a device such as a wireless-enabled PDA, a tablet PC, a wearable computing device or system, or a netbook that is capable of obtaining information via the Internet or other networks. In another example, client computing device 430 may be a wearable computing system, such as a wristwatch as shown in FIGURE 3. As an example the user may input information using a small keyboard, a keypad, microphone, using visual signals with a camera, or a touch screen. As yet another example, client computing device 440 may be a desktop computing system including a keyboard, mouse, camera and other input devices.

In some examples, client computing device 420 may be a mobile phone used by a passenger of a vehicle. In other words, user 422 may represent a passenger. In addition, client computing device 430 may represent a smart watch for a passenger of a vehicle. In other words, user 432 may represent a passenger. The client computing device 440 may represent a workstation for a human operator, for example, a human operator of a depot area, a remote assistance operator, a technician who provides roadside assistance, or someone who may otherwise provide assistance to an autonomous vehicle and/or a passenger. In other words, user 442 may represent an operator (e.g. operations person) of a transportation service utilizing the autonomous vehicles 100, 100A, 100B, 100C. Although only a few passengers and human operators are shown in FIGURES 4 and 5, any number of such passengers and human operators (as well as their respective client computing devices) may be included in a typical system.

As with memory 130, storage system 450 can be of any type of computerized storage capable of storing information accessible by the server computing devices 410, such as a hard-drive, memory card, ROM, RAM, DVD, CD-ROM, write-capable, and read-only memories. In addition, storage system 450 may include a distributed storage system where data is stored on a plurality of different storage devices which may be physically located at the same or different geographic locations. Storage system 450 may be connected to the computing devices via the network 460 as shown in FIGURES 3 and 4, and/or may be directly connected to or incorporated into any of computing devices 110, 410, 420, 430, 440, etc. Storage system 450 may store various types of information which may be retrieved or otherwise accessed by a server computing device, such as one or more server computing devices 410, in order to perform some of the features described herein.

### EXAMPLE METHODS

In addition to the operations described above and illustrated in the figures, various operations will now be described. It should be understood that the following operations do not have to be performed in the precise order described below. Rather, various steps can be handled in a different order or simultaneously, and steps may also be added or omitted.

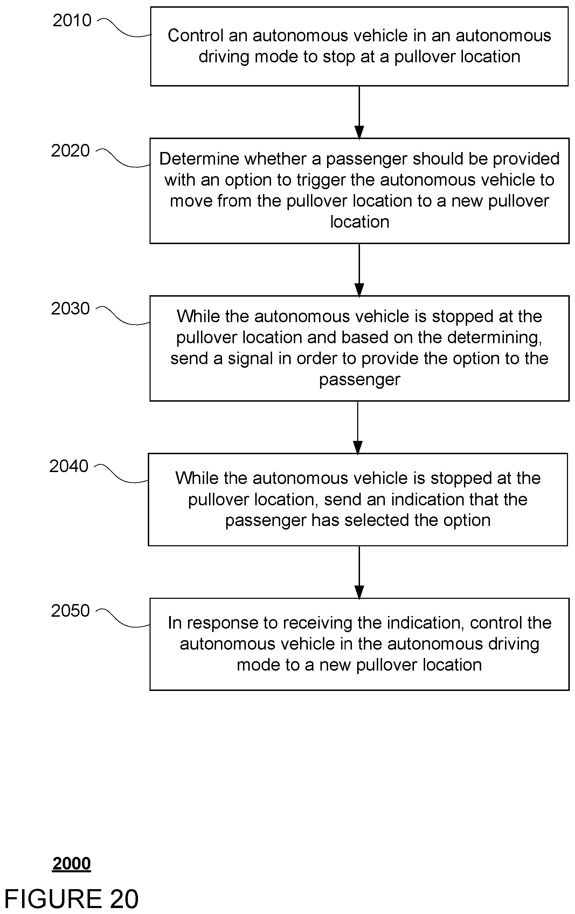

FIGURE 20 is an example flow diagram 2000 depicting an example of pullover location changes for autonomous vehicles, which may be performed by one or more processors, such as the one or more processors of the server computing devices 410. In this example, at block 2010, a vehicle is controlled in an autonomous driving mode to stop at a pullover location.

In order for the autonomous vehicle to do so, a user may first download an application for requesting a vehicle to a client computing device. For example, users 422 and 432 may download the application via a link in an email, directly from a website, or an application store to client computing devices 420 and 430. For example, a client computing device may transmit a request for the application over the network 460, for example, to one or more server computing devices 410, and in response, receive the application. The application may be installed locally at the client computing device.

A user, such as user 422, may input a destination location for a trip into a client computing device, such as client computing device 420, via an application, and the application may send a signal identifying the destination location to one or more server computing devices 410. This destination location may be defined as an address, a name (e.g., a business name), a type of business (e.g., a hardware store), etc. In some instances, the user may also identify one or more intermediate destinations in a similar manner.

The user may also specify or otherwise provide a pickup location at which a vehicle can pick up the user. As an example, a pickup location can be defaulted to a current location of the passenger's client computing device, but may also be a recent, suggested, or saved location near the current location associated with the user's account. The user may enter an address or other such information, tap a location on a map or select a location from a list in order to identify a pickup location. For instance, the client computing device 420 by way of the application may send its current location, such as a GPS location, and/or a name, address or other identifier for the pickup location to the one or more server computing devices 410 via network 460. In this regard, the user may share his or her current location (or other information such as accelerometer or gyroscope information generated by such devices at the client computing device) with the server computing devices 410 when using the application and/or requesting a vehicle for a trip.

The server computing devices 410 may then provide the pickup and drop off locations to the computing device 110, for example, via the network 460. The computing devices 110 may then control the autonomous vehicle 100 as described above to a destination, for example, either the pickup or drop off location. For example, during a trip, the autonomous vehicle 100 may control itself to a pickup location by setting the pickup location as the current destination of the autonomous vehicle in order to pick up a passenger. Thereafter, the autonomous vehicle may control itself to the drop off location by setting the drop off location as the current destination of the autonomous vehicle in order to drop off the passenger. In some instances, the trip may include one or more intermediate destinations where the passenger may disembark and thereafter embark again while the autonomous vehicle waits for the passenger.

Once the autonomous vehicle is within a predetermined distance of its current destination, the computing devices 110 may identify a pullover location. For instance, the planning system 168 or routing system 170 may search along the autonomous vehicle's current route to the destination and identify a set of potential pullover locations. As an example, a set of potential pullover locations may be determined within a predetermined distance, such as 35 meters, 40 meters, 50 meters or more or less, of the current destination of the autonomous vehicle along a curb or road edge or other reasonable location for stopping or parking a vehicle. In some instances, locations within intersections, as well as other potentially dangerous areas such as railroad crossings or near (e.g., within a predetermined distance such as 5 meters, 10 meters, 20 meters, 50 meters or more or less) or overlapping with crosswalks or other pedestrian crossing areas, no stopping zones, driveways near emergency respondents such as fire stations, hospitals, or any other areas that may have safety impact to riders or pedestrians, etc. may be automatically discarded or simply ignored.

Within the predetermined distance, an area adjacent to an edge of a roadway may be evaluated to determine whether the edge is occupied by an object. For example, the routing system 170 may determine a current route for the autonomous vehicle. The route may be used to identify edges in the map information. These edges as well as any connected edges beyond the destination for some predetermined distance, such as 30 meters, 35 meters, 40 meters or more or less, may be used as a "baseline" for identifying potential pullover locations. In some instances, the map information may identify discrete pullover locations (e.g., parking spaces) or parking areas (e.g., shoulder areas which are suitable for parking lawfully, etc.) along the base.

In some instances, if the map information identifies parking areas, a set of potential pullover locations may be identified by splicing the edges of the map information along the baseline of the parking areas into discrete sections of a predetermined length, such as every 0.5 meters or more or less, and determining whether any objects (e.g. vehicles, pedestrians, traffic cones, debris, etc.) are located within an area where the autonomous vehicle would be if parked adjacent to the edge within those sections. In this regard, the splices may actually be significantly shorter than the autonomous vehicle 100. However, for each splice, the area analyzed to determine whether a curb is occupied may actually be defined by a two-dimensional area or three-dimensional volume where the autonomous vehicle would be located if some reference point on the autonomous vehicle, such as the front bumper or rear axle, was positioned within that splice, at the start of that splice, or at the end of that splice. By choosing a single point for each splice and therefore each potential pullover location (discussed further below), if selected, the autonomous vehicle may control itself so that the vehicle's front bumper or rear axle will be at that point when stopped in the pullover location. Any splices which correspond to areas unoccupied by other objects (e.g., no trash, debris, other vehicles, etc.) can be "merged" into larger sections. This may be repeated in order to identify sections of the parking areas that are large enough for the autonomous vehicle to fit into and which may also include an additional buffer area or distance to enable an autonomous vehicle to actually maneuver into. Accordingly, this "buffer" area or distance may be determined based on the maneuvering capabilities of the autonomous vehicle.

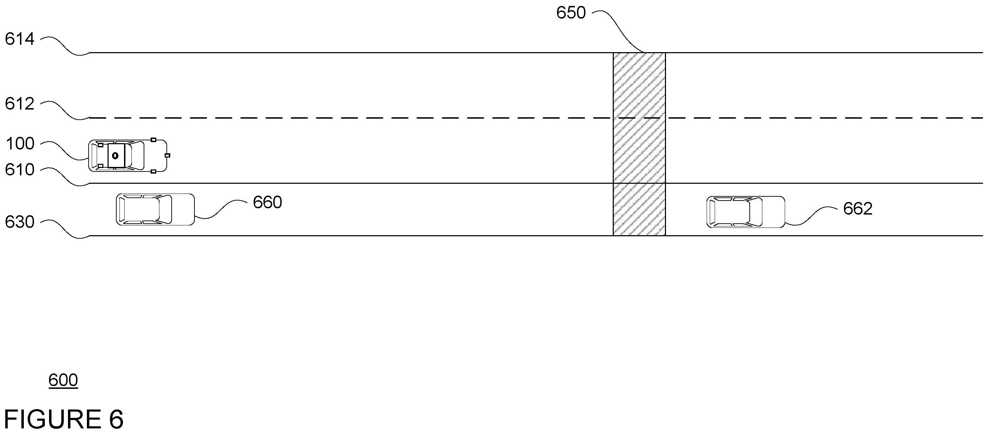

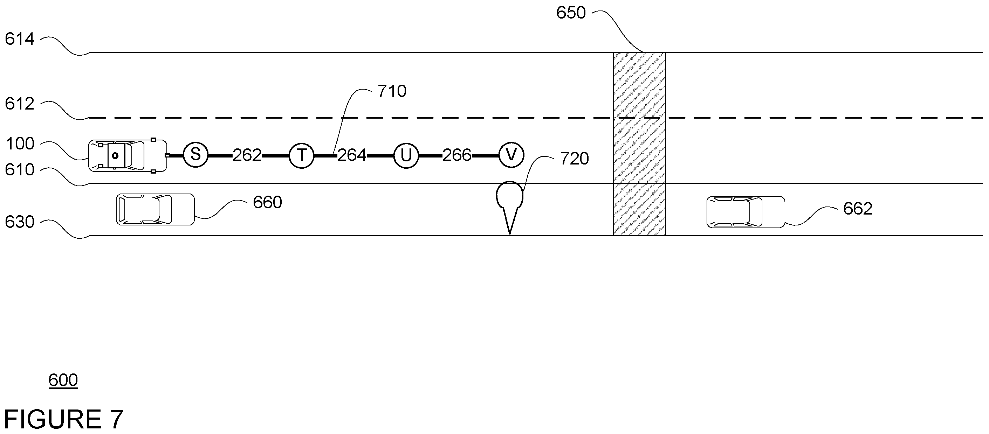

FIGURE 6 represents an example of the autonomous vehicle 100 driving in a geographic area corresponding to the geographic area of the map information 200. In this regard, the shape, location and other characteristics of lane lines 610, 612, 614, curb 630, and crosswalk 650 correspond to the shape, location and other characteristics of lane lines 210, 212, 214, curb 230, and crosswalk 250 of the map information 200. In addition, the perception system may detect and identify the location and characteristics of parked vehicles 660 and 662 which currently are located within a shoulder area of geographic area 600 between the lane line 610 and the curb 630. Turning to FIGURE 7, which provides additional details to the example of FIGURE 6, autonomous vehicle 100 is currently following a route 710 which traverses edges 260, 262, 264, 266 in the map information 200 order to reach a destination identified by the marker 720.

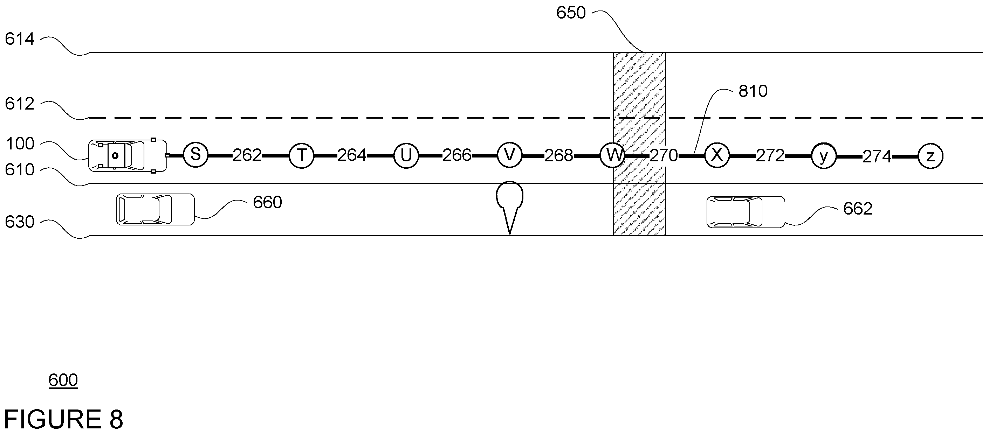

As noted above, the computing devices 110 may identify a baseline for identifying a set of potential pullover locations. Turning to FIGURE 8, the edges of the route 710 as well as edges 268, 270, 272, 274 (shown in FIGURE 2B) for a predetermined distance beyond the destination may be identified as a baseline 810. As such, any of these edges that are adjacent to parkable areas in the map information, including the parkable areas of shoulder area 232, street sweeping area 234, and shoulder areas 236, 238, may be subdivided into a plurality of splices as described above. For example, as shown in FIGURE 8, the area adjacent to edge 272 is depicted as subdivided into 4 splices 1, 2, 3, 4 as an example only. In this example, each of splices 1, 2 and 3 are occupied by the parked vehicle 662 and therefore is not available for the autonomous vehicle 100. It will be appreciated that each of the edges 260, 262, 264, 266, 268, 270, 274 may also be subdivided into such splices.

Any unoccupied unmerged splices including the area taken up by the autonomous vehicle if the autonomous vehicle were to park in the unmerged splices as well as any merged splices including the area taken up by the autonomous vehicle if the autonomous vehicle were to park in the merged splices may be identified as potential pullover locations. Each of these potential pullover locations may be as long as the autonomous vehicle and may be defined using a particular point on the vehicle such as the rear axle or some other location, and need not include additional distance to enable an autonomous vehicle to actually maneuver into the potential pullover location.

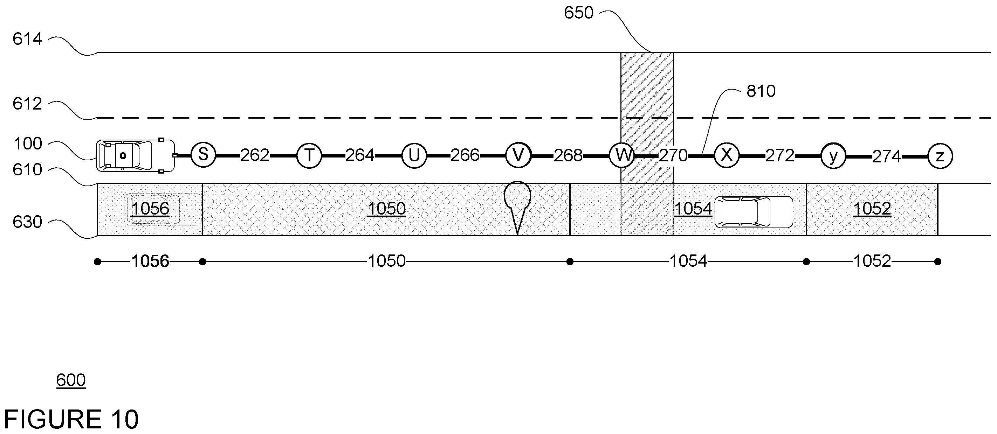

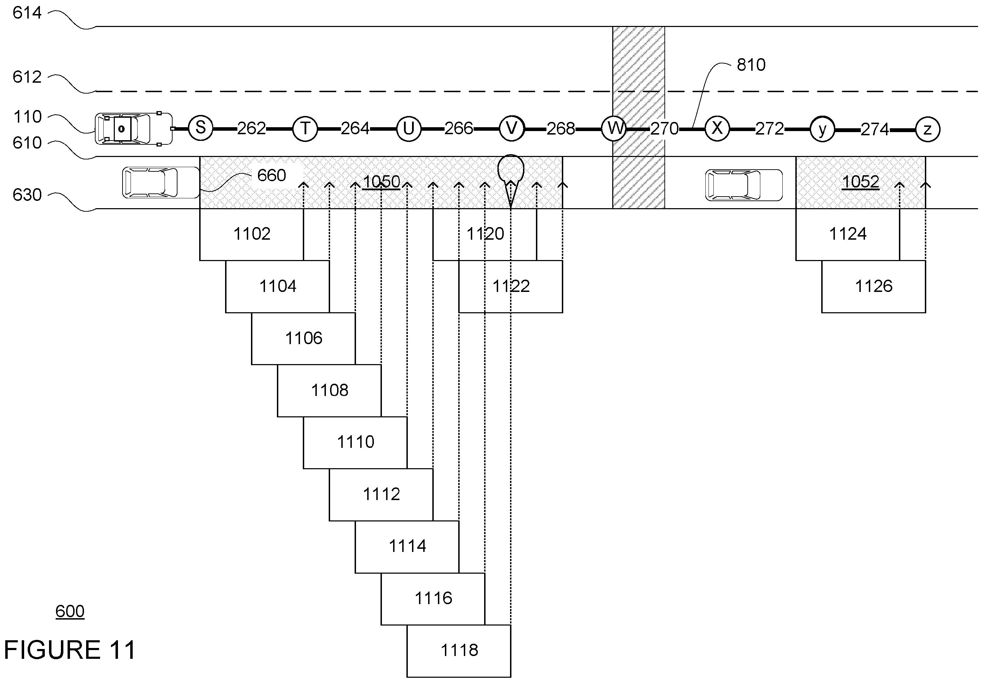

As shown in FIGURE 10, each splice may be analyzed using the objects identified by the perception system, such as parked vehicles 660, 662, in order to identify areas, such as areas 1050, 1052 (the corresponding length of which is also shown as offset for clarity), along the curb 230 which are both identified as parkable in the map information and determined to be unoccupied based on sensor data generated by the perception system. Similarly, areas 1054, 1056 (the corresponding length of which is also shown as offset for clarity) may be identified as not available for the autonomous vehicle as potential pullover locations because they are either not identified as parkable areas in the map information (e.g., such as the area 240 or are occupied by an object such as a parked vehicle, trash can, debris, etc. As such, sub portions of these areas 1050, 1052 corresponding to the size of the autonomous vehicle plus some buffer distance may then be included in a set of potential pullover locations 1102, 1104, 1106, 1108, 1110, 1112, 1114, 1116, 1118, 1120, 1122, 1124, 1126 as depicted in FIGURE 11.

In some instances, unoccupied splices that are within a predetermined distance of another object, such as a parked vehicle, may be discarded in order to account for the space needed for the pullover maneuver or for differences between vehicles/software version capabilities. This "buffer" area may be selected by human operators based on historical or other data.

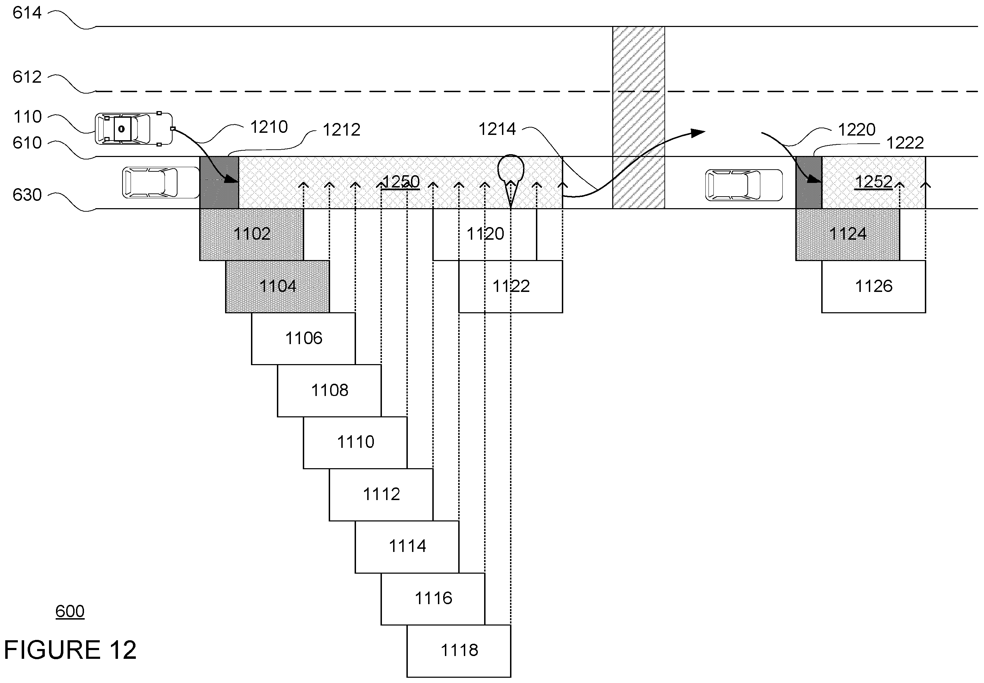

For example, as shown in FIGURE 12, autonomous vehicle 100 may need at least the distance corresponding to paths 1210, 1214 (or buffer area 1212) in order to maneuver around parked vehicle 660. Similarly, autonomous vehicle 100 may need at least the distance corresponding to path 1220 (or buffer area 1222) in order to maneuver around parked vehicle 662. In this regard, buffer areas 1212, 1222 may be subtracted or otherwise removed from the areas 1050, 1052 resulting in the areas 1250, 1252 (depicted with shading for ease of understanding) along the curb 630 being both identified in the map information as a parkable area as well as unoccupied by another object. In this regard, the potential pullover locations 1102, 1104, 1124 may be excluded from the set of potential pullover locations.

The set of potential pullover locations may be evaluated to identify the "best" of these pullover locations. For instance, the evaluation may include scoring the pullover locations or assessing a "cost" for each potential pullover location. A cost of a potential pullover location may be assessed using any number of factors including, for example, the type of area in which the potential pullover location is located, the complexity of the maneuvers required to reach the potential pullover location (e.g., the greater the complexity, the greater the cost), the distance from the potential pullover location to the destination location (e.g., the greater the distance, the greater the cost), the walking distance from the potential pullover location to the destination location (e.g., the greater the complexity, the greater the cost), the estimated time of arrival or distance from the potential pullover location to the next destination of the autonomous vehicle (e.g., the later the estimated time of arrival, the greater the cost), proximity to certain roadway features such as a bridge, an intersection, an on ramp (e.g., to a highway), a tunnel, railroad tracks, etc. (e.g., the closer these are, the greater the cost), etc. Different types of areas may therefore be associated with different costs. For example, the most preferred types of areas may have the lowest costs, such as a parking lot or designated parking space, whereas permissible but less desirable types of areas such as those in street sweeping areas may have greater costs. Even less desirable types of areas may have even greater costs. For example due to the likelihood of encountering vulnerable road users such as pedestrians or bicyclists is greatest such as pullover locations adjacent to residential driveways, bicycle lanes, or closer crosswalks may have the greatest costs. In this regard, if a pullover location was in a dangerous or unlawful parking area (such as overlapping with or too close crosswalks or railroad tracks), such areas would not be identified as parkable in the map information and need not actually be considered within the set of potential pullover locations.

These costs may be weighted depending on their relative importance to the transportation system and summed together to determine an overall cost for the potential pullover location. The potential pullover location of the set with the lowest cost may be selected as the pullover location for the autonomous vehicle. The selected pullover location may then be set as a destination for the autonomous vehicle, and the autonomous vehicle may control itself to pullover and stop in the selected pullover location using the various systems as described above. For example, the pullover location 1118 may have a lower cost than the potential pullover locations 1126 and 1106 because the pullover location 1118 is closer to the destination represented by the marker 720. Similarly, the potential pullover location 1118 may have a lower cost than the potential pullover locations 1106, 1108, 1110, 1112, 1114, and 1116 as these potential pullover locations correspond to the location of the street sweeping area 234. As another example, the potential pullover location 1118 may have a lower cost than the potential pullover locations 1120 and 1122 as these potential pullover locations are closer to the location of crosswalk 230. In this regard, the total cost of each potential pullover location may be determined by summing the costs including a first cost C1 representative of the distance A to the destination represented by the marker 720, a second cost C2 for any overlap with a street sweeping area, a third cost C3 representative of the proximity to a crosswalk, and so on. As an example, the costs C1, C2, C3 and any other costs may be combined via a weighted sum, where the weights for each of the different costs may be selected by the transportation service based on the relative importance of those costs to the transportation service's goals. As an example, the weight for being close to a crosswalk may be greater than the weight for being within a street sweeping area, and so on.

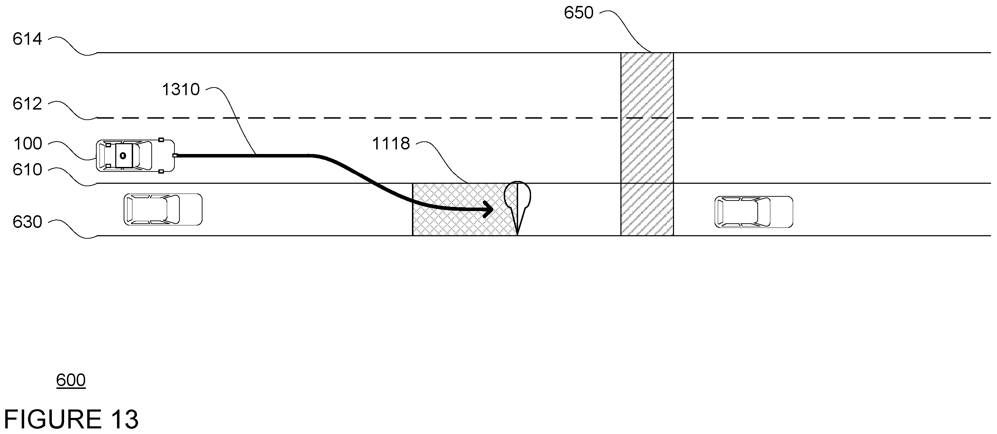

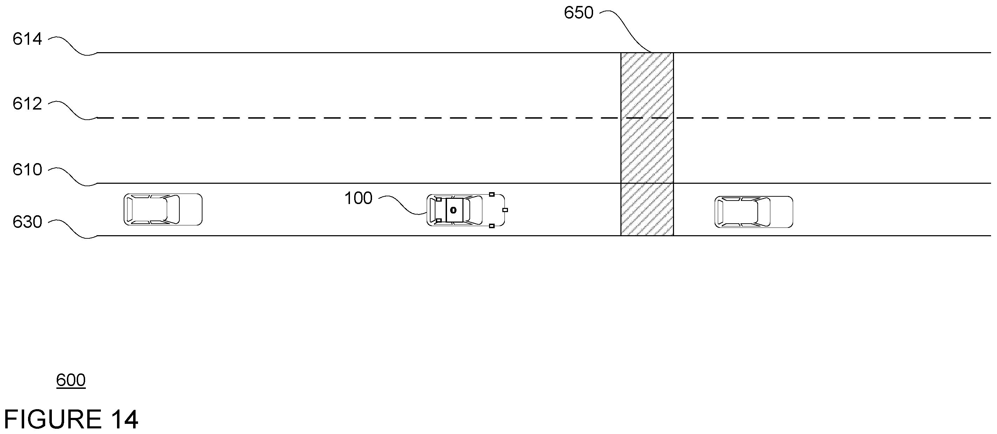

FIGURE 13 depicts an example of the geographic area including a route 1310 to a destination corresponding to the potential pullover location 1118. In this regard, the potential pullover location 1118 may have the lowest cost of the set of potential pullover locations. In this regard, the computing devices 110 may set the location of the potential pullover location 1118 as the current destination of the autonomous vehicle. The routing system may then generate a route 1310. The computing devices 110 may then control the autonomous vehicle according to the route 1310 in order to stop the autonomous vehicle at 1118 as shown in the example of FIGURE 14.

Some systems may enable an autonomous vehicle to "move along" if its current pullover location is impeding other road users (e.g., vehicles, bicyclists, pedestrians, etc.). For example, if the computing devices of the autonomous vehicle determine that it is impeding another road user, this may be used to send a move along request to a remote computing device. Of course this other road user may need to be close to the autonomous vehicle to avoid false positive situations (e.g., within 50 meters or more or less).

For example, an autonomous vehicle may be determined to be impeding another road user when the pullover location of the autonomous vehicle would prevent the other road user from passing or driving around the autonomous vehicle or rather is causing an "impassable situation" for more than some predetermined period of time (e.g., 5 seconds, 10 seconds or more or less after pulling over). As another example, an autonomous vehicle may be determined to be impeding another road user when the pullover location of the autonomous vehicle would prevent the other road user from exiting a driveway for more than some predetermined period of time (e.g., 1 second, 2 seconds or more or less after pulling over). These predetermined periods of time may be calculated after the autonomous vehicle is considered pulled over (e.g., is stopped) in order to avoid false positive situations in which another road user may be tailgating the autonomous vehicle.

In such situations, the autonomous vehicle may differentiate between certain types of vehicles. For instance, the predetermined periods of time may differ for different types of vehicles. For example, the autonomous vehicle's computing devices may wait longer for a non-emergency vehicle than for an emergency vehicle before determining that the autonomous vehicle is impeding the non-emergency vehicle. In addition or alternatively, the autonomous vehicle's computing devices may only determine that it is impeding a nonemergency vehicle if the non-emergency vehicle is moving, but may determine that it is impeding an emergency vehicle if the emergency vehicle is stationary or moving . Again, once the autonomous vehicle is determined to be impeding the other road user, the computing devices may send the move along request.

In some instances, the remote computing device may be manned by a human operator who is able to review the situation, e.g., by reviewing camera images or other sensor data captured by the autonomous vehicle and confirming that the autonomous vehicle should move from its current pullover location. The remote computing device may then send a move along signal to the autonomous vehicle causing the autonomous vehicle to move from its current pullover location. In other instances, the remote computing device may "auto-answer" certain requests, that is respond with a move along signal without waiting for a human operator to review the situation and confirm. Such an approach may reduce latency (e.g., from 20 seconds with a human operator involved to less than 1 second when auto-answering) while preventing situations in which the autonomous vehicle sends multiple requests.

In response to receiving the move along signal, the computing devices of the autonomous vehicle may search for a new pullover location along the autonomous vehicle's current route that is at least some predetermined distance (e.g., at least 5 meters or more or less) from the current pullover location. This may involve conducting a search of map information which loops around past the current pullover location (e.g., goes around the block). However, this new search may result in a failed pullover flag (as discussed further below) or a new pullover location that is far away from the destination (e.g., the pickup, intermediate drop off, or final drop off location of the passenger). Moreover, this approach does not take into consideration the needs of the passenger, only those of other road users.

In some instances, when faced with an inconvenient pullover location, a passenger may attempt to change the pullover location, for example, by moving a destination marker (e.g., representative of a pickup, intermediate drop off, or final drop off location for the passenger) with respect to a map or requesting assistance from a human operator. Typically moving the location of a destination marker may require very large changes (e.g. a city block or two) before the trip has ended (e.g., before the autonomous vehicle has stopped or pulled over to allow a passenger to embark or disembark and/or goods to be loaded or unloaded) in order for the autonomous vehicle to actually identify and thereafter move to a new pullover location. Similarly, requesting assistance from a human operator may require establishing communication with a remote computing device and some back and forth between the passenger and the human operator, as well as the human operator setting a new destination for the autonomous vehicle, which may cause unnecessary delays and annoyance to the passenger.

As noted above, the passenger may be provided with an option to trigger the autonomous vehicle to move to a new location and allow the passenger to embark or disembark the autonomous vehicle. Returning to FIGURE 20, at block 2020, whether a passenger should be provided with an option to trigger the autonomous vehicle to move from the pullover location to a new pullover location is determined. In this regard, before providing the passenger with the option, the computing devices of the autonomous vehicle may first determine whether the passenger should be provided with the option. This may occur while the vehicle is stopped at the pullover location rather than while the autonomous vehicle is still moving (e.g., still driving to its current destination). Alternatively, this may occur before the vehicle is stopped at the pullover location (e.g., before or after the pullover location has been identified and set as the destination of the vehicle) and while the autonomous vehicle is still moving or driving to its current destination even if temporarily stopped (e.g., for a traffic light, stop sign, traffic congestion, etc.).

In this regard, the computing devices 110 may determine whether the autonomous vehicle is stopped in an area where it is possible for the autonomous vehicle to pull out and pull over again safely. For instance, providing the option may not be appropriate when there are no alternative pullover locations nearby, the costs of any nearby pullover locations are too high, and/or autonomous vehicle is located on or is approaching roadway features such as a bridge, an intersection, an on ramp (e.g., to a highway), a tunnel, railroad tracks, etc. If so, then the computing devices may determine that the autonomous vehicle is not able to pull over in another location and may thus not provide the option to the passenger. If not, then the computing devices may determine that the autonomous vehicle is able to pull over in another location and may thus provide the option to the passenger.

In addition or alternatively, the computing devices of the autonomous vehicle may determine whether the autonomous vehicle is able to pull over in another location or rather that another nearby pullover location is actually available. This may involve reviewing previously identified set of potential pullover locations to determine whether any of the candidate locations of the set of potential pullover locations is available and not behind the autonomous vehicle (e.g., because the autonomous vehicle has not passed the candidate location). For example, returning to the example of FIGURE 11, the set of potential pullover locations included each of pullover locations 1106, 1108, 1110, 1112, 1114, 1116, 1118, 1120, 1122, 1126. Of these, the potential pullover locations 1106, 1108, 1110, 1112, 1114, 1116, 1118 are the autonomous vehicle's current location or are behind the autonomous vehicle. Thus, potential pullover locations 1120, 1122, 1126 may still be available. As such, then the computing devices may determine that the autonomous vehicle is able to pull over in another of the potential pullover locations and may thus provide the option to the passenger. If none of the potential pullover locations of the set were available or not behind the autonomous vehicle (or its current location), then the computing devices may determine that the autonomous vehicle is not able to pull over in another location and may thus not provide the option to the passenger.

Alternatively, rather than reviewing previously identified set of candidate locations, the routing system of the autonomous vehicle may be used to determine a new route to the original destination of the autonomous vehicle and search for new pullover locations along that route. These potential pullover locations may then be set to a planning system of the autonomous vehicle for evaluation to determine whether to provide the option to the passenger.

Returning to FIGURE 20, at block 2030, while the vehicle is stopped at the pullover location and based on the determining, a signal is sent in order to provide the option to the passenger. For instance, when the computing devices of the autonomous vehicle determine that the passenger should be provided with the option, the computing devices may automatically provide that option to the passenger.

The option may be provided to the passenger in various ways. For instance, this option may be displayed at a client computing device and/or on a display of the autonomous vehicle. For example, if the autonomous vehicle is stopped at a pickup location, the option may be provided to and displayed at the passenger's client computing device. If the autonomous vehicle is stopped at a drop off location, the option may be provided to and displayed at the passenger's client computing device and/or a display of the autonomous vehicle. In this regard, the computing devices may send a signal to the client computing device directly (e.g., via a nearfield, BLUETOOTH, or other communication protocol) or indirectly (e.g., via server computing devices 410 which relay the signal to the client computing device via a network).

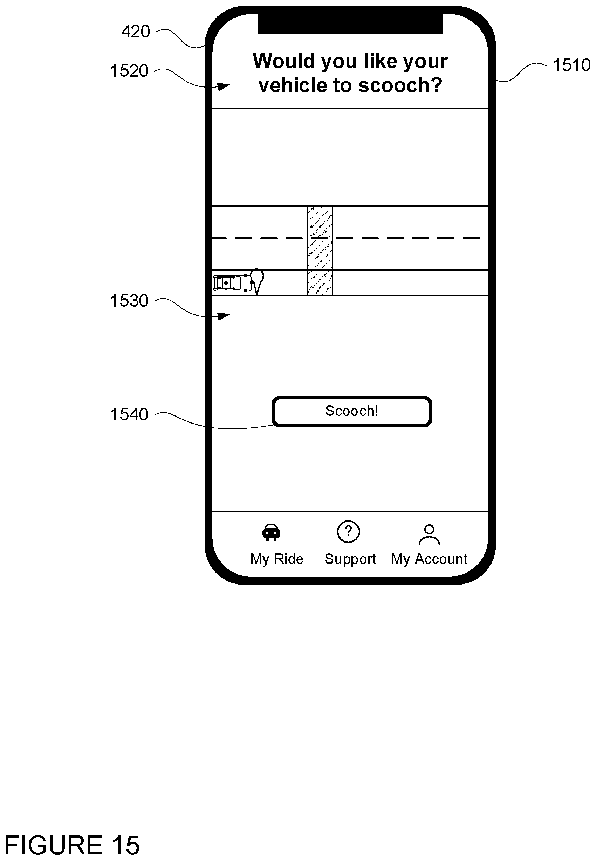

For example, FIGURE 15 is an example screen display 1510 on the client computing device 420. In this example, the screen display 1510 includes a notification 1520 indicating that the passenger is able to request that the autonomous vehicle move to a new location (e.g., "scooch"). In this example, the screen display 1510 also includes a map 1530 including a representation of certain features including the autonomous vehicle 100 as well as the crosswalk 230/630. The screen display 1510 also includes an option 1540 which the user can select in order to send a signal to the autonomous vehicle either directly (e.g., via a nearfield, BLUETOOTH, or other communication link between the computing device 110 and the client computing device 420) or indirectly (e.g., via the network 460 to the server computing devices 410 which relay or send a corresponding signal to the computing device 110). The signal may then cause the computing devices to select a new pullover location and control the autonomous vehicle to that new pullover location.

In some instances, the option may be provided only when the autonomous vehicle has not driven or gone too far past the original destination (e.g., pickup or drop off location). For example, when an autonomous vehicle has driven too far beyond the original destination (e.g., greater than 10 meters or more or less) in order to find a pullover location, the computing devices may flag the pullover location as a failed pullover location. As such, if the autonomous vehicle has not already driven past the original destination, there may be a greater distance available for the autonomous vehicle to find a new pullover location. In other instances, if the current pullover location is beyond the original destination, the computing devices may then search for a new pullover location within a threshold distance of the current location of the autonomous vehicle (e.g., 20 meters or more or less) rather than the original destination.

Returning to FIGURE 20, at block 2040, while the vehicle is stopped at the pullover location, an indication that the passenger has selected the option is received. The passenger may then provide user input selecting the option (e.g., by tapping on a touch-sensitive display, etc.), either in the autonomous vehicle and/or on the passenger's client computing device. For instance, if the user input is provided at the autonomous vehicle, this input may be received directly by the computing devices 110. Alternatively, if the user input is provided at the client computing device, the client computing device may send a signal to the computing devices of the autonomous vehicle directly (e.g., via a nearfield, BLUETOOTH, or other communication protocol) or indirectly (e.g., via the server computing devices 410 which relays the signal to the computing devices 110 via a network).

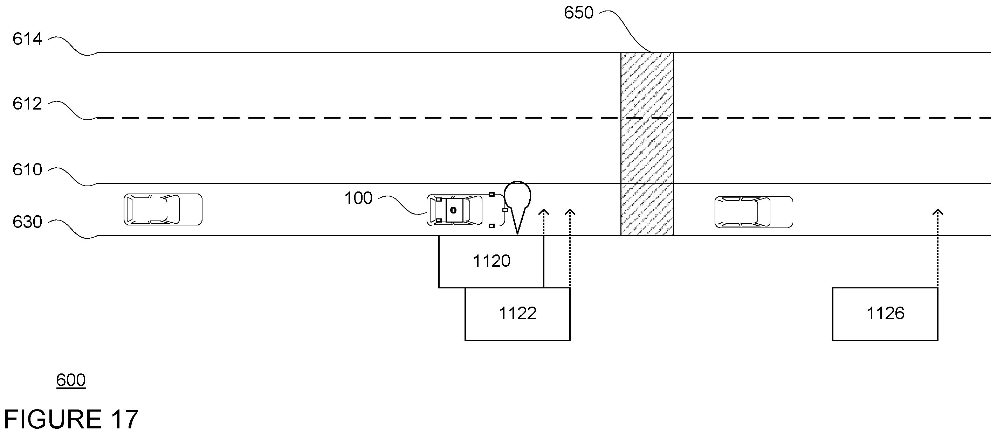

Returning to FIGURE 20, at block 2050, in response to receiving the indication, the vehicle is controlled in the autonomous driving mode to a new pullover location. The computing devices may then use this signal to move from its current pullover location to a new pullover location. As noted above, this new pullover location may be selected from a prior set of potential pullover locations, for example, by using the cost analysis described above to select one of the potential pullover locations 1120, 1122, 1126 as shown in FIGURE 17.

In some instances, the new pullover location may be some fixed distance such as 2 meters or more or less away from the current pullover location or at least some predetermined distance such as at least 2 meters or more or less away from the current pullover location (e.g., the computing devices will conduct a search starting from the predetermined distance from the current pullover location). Referring to FIGURE 17, the potential pullover location 1120 may be discarded as it may be within the fixed distance of the current pullover location considered too close to the current location of the autonomous vehicle 100 in the potential pullover location 1118. In addition, the cost of the potential pullover location 1126 may be greater than the cost of the potential pullover location 1120 using the example cost analysis described above. In that regard, the potential pullover location 1120 may be selected as the new pullover location.

In some instances, the new pullover location need not be located at least some fixed distance (e.g., greater than some minimum distance) from the current pullover location. Instead, the computing devices may conduct a search within a predetermined distance of the autonomous vehicle's current location to find a new pullover location. For example, the computing devices 110 may conduct a new search within the predetermined distance of the current location of the autonomous vehicle using the approach described above (e.g., using a baseline to determine available splices, etc.). In this regard, a baseline may be determined using some distance along a route to a next destination of the autonomous vehicle (e.g., a next pickup location, a drop off location, etc.) or the last destination of the autonomous vehicle (immediately before the current pullover location). In this regard, the routing system may determine a new route to the next destination or last destination. If the last destination is used and this has already been passed by the autonomous vehicle, the routing system may determine a loop for the autonomous vehicle (e.g., a loop "around the block") away from and then back towards the last destination. The route may then be used to determine the baseline (e.g., some distance along the route) and to identify potential pullover locations, and select a new pullover location as described above.

In other instances, the passenger may be provided with an option to select how far the distance to the new pullover location should be. For example, a passenger may select between distances (e.g., 2 meters or 5 meters) or may use a sliding scale of longer and shorter distances. As another example, the passenger may selection more specific options such as sleeting on of the set of potential pullover locations (e.g., the top 5 ranked locations) or options which may cause the autonomous vehicle to move itself to the next section of available curb space, through the next intersection, to the next driveway or parking lot, go around a corner (e.g., turn left or right at the next intersection), do a "loop" (e.g., "drive around the block"), and so on. Of course, any of these distances may be "unavailable" to the passenger or simply ignored if the resulting new pullover location would be in a certain type of area (e.g., an intersection, near train tracks, no stopping zone, on ramp, etc.).

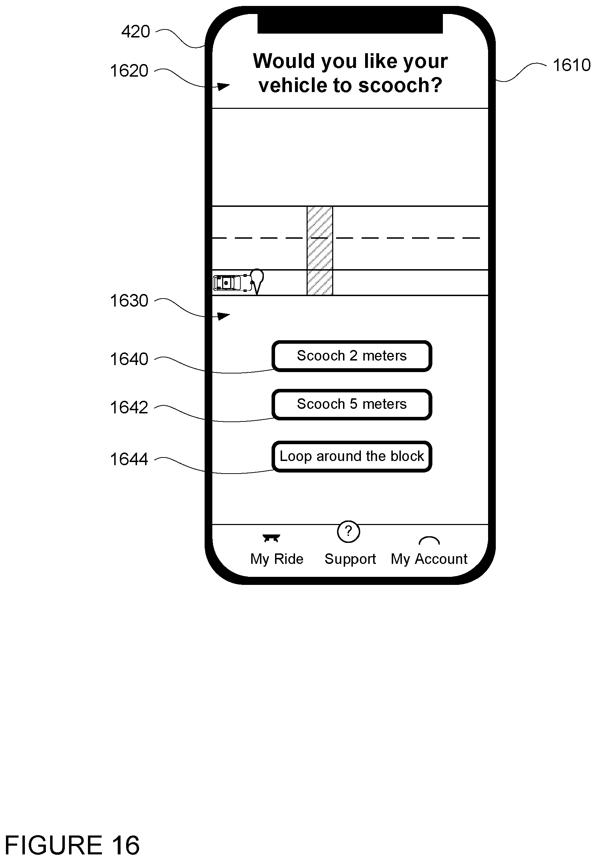

For example, FIGURE 16 is an example screen display 1610 on the client computing device 420. In this example, the screen display 1610 includes a notification 1620 indicating that the passenger is able to request that the autonomous vehicle move to a new location (e.g., "scooch"). In this example, the screen display 1610 also includes a map 1630 including a representation of certain features including the autonomous vehicle 100 as well as the crosswalk 240/640. The screen display 1610 also includes a set of options 1640, 1642, 1644 which the user can select in order to send a signal to the autonomous vehicle either directly (e.g., via a nearfield, BLUETOOTH, or other communication link between the computing device 110 and the client computing device 420) or indirectly (e.g., via the network 460 to the server computing devices 410 which relay or send a corresponding signal to the computing device 110). In this example, the set of options includes an option to scootch 2 meters (e.g., move at least 2 meters), scootch 5 meters (e.g., move at least 5 meters), or loop around the block (e.g., drive in a loop to find a new pullover location, potentially before the current pullover location along the original route).

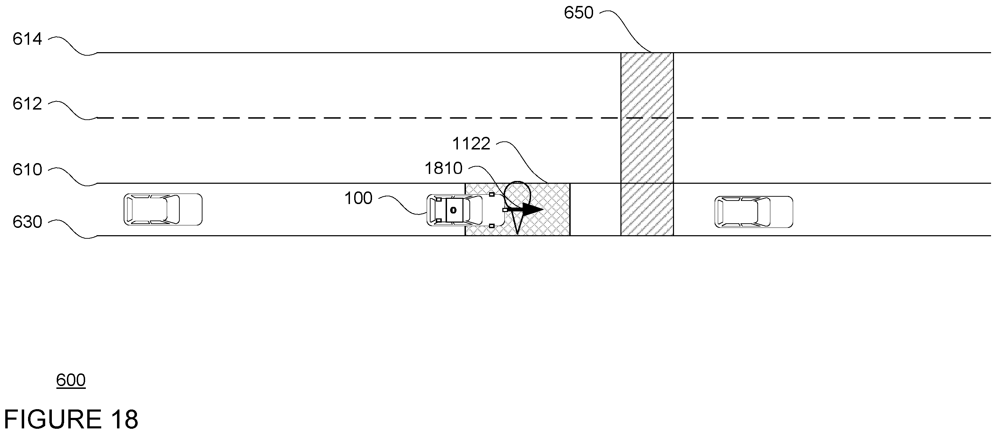

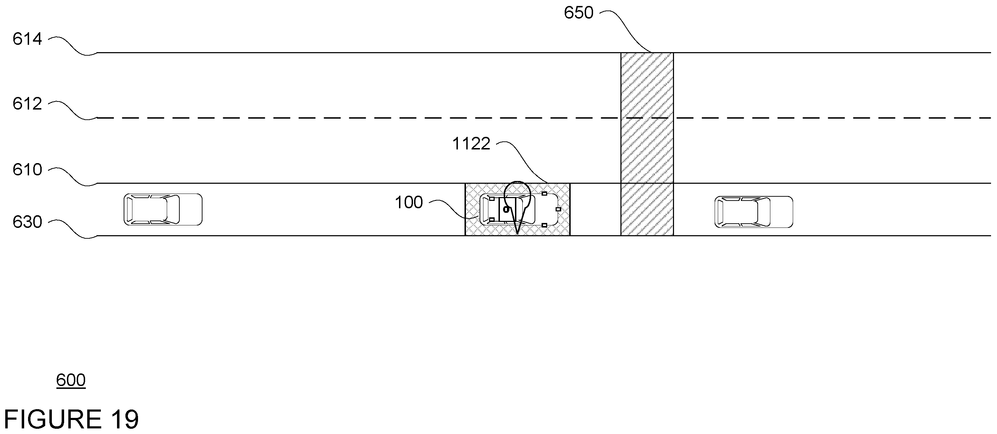

The new pullover location may be set as the destination of the autonomous vehicle, and the computing devices may control the autonomous vehicle to stop in the new pullover location. For example, as shown in FIGURE 18, the computing device 110 may control the autonomous vehicle to pull over and stop in the new pullover location, here the location of potential pullover location 1122. This may involve setting the location of the pullover location 1122 as the new destination for the autonomous vehicle, using the routing system to generate a new route 1810, using the planning system to generate trajectories based on the new route, and so on. Once stopped in the new pullover location as depicted in FIGURE 19, the passenger may embark or disembark. In some instances, if the autonomous vehicle is not able to actually generate a trajectory that will enable the autonomous vehicle to reach the new pullover location (e.g., there is an object in the way or special maneuvers - e.g., reversing or k-turn - are required), the computing devices may perform the move along response by searching for a new pullover location along the autonomous vehicle's current route that is at least some predetermined distance from the current pullover location as described above. While this may result in the autonomous vehicle driving past the original destination (which may be considered a failed pullover) and a longer walk for the passenger, the result may still be a safer pullover location and an improved experience for the passenger.

To avoid the failed pullover flag for the new pullover location, the autonomous vehicle need not assign this flag to the new pullover location when a passenger has selected the option or when a passenger has selected the option and the new pullover location is not too great a distance from the original destination location (e.g., no more than 50 meters or more or less).

In some instances, each time the autonomous vehicle stops, the process may begin again to enable the passenger to select the option to trigger the autonomous vehicle to move to a new pullover location again.

In some instances, whether a passenger has selected the option may be used to inform future evaluations of pullover locations. For example, if one or more passengers have selected the option at the same or nearly the same pullover location, this may indicate that such pullover locations are less desirable and should be avoided (e.g., assigned a higher cost in future evaluations).

Although the above examples relate to transporting a passenger, the same or similar features may be used in situations in which the autonomous vehicle is transporting goods. For example, a user may be provided with an option on a client computing device as in the examples above to select the option to trigger the autonomous vehicle to move to a new pullover location. The features described herein may enable passengers of an autonomous vehicle to change a pullover location of the autonomous vehicle. In some instances, the features described herein may allow passengers to respond to temporary inconveniences or blockages such as puddles, crowds of people, etc. in real time, rather than requiring the passenger to choose the pullover location before the autonomous vehicle has stopped. This may improve the convenience of pullover locations for passengers and improve overall ridership.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only some of many possible embodiments. Further, the same reference numbers in different drawings can identify the same or similar elements.

The specification includes the following subject-matter expressed in the form of clauses 1-21.
1. A method comprising:
   controlling, by one or more processors, an autonomous vehicle in an autonomous driving mode to stop at a pullover location;
   determining, by the one or more processors, whether a passenger should be provided with an option to trigger the autonomous vehicle to move from the pullover location to a new pullover location,
   while the autonomous vehicle is stopped at the pullover location and based on the determining, sending, by the one or more processors, a signal in order to provide the option to the passenger;
   while the autonomous vehicle is stopped at the pullover location, receiving, by the one or more processors, an indication that the passenger has selected the option; and
   in response to receiving the indication, controlling, by the one or more processors, the autonomous vehicle in the autonomous driving mode to a new pullover location.
2. The method of clause 1, wherein determining whether the passenger should be provided with the option occurs while the autonomous vehicle is stopped at the pullover location.
3. The method of clause 1 or 2, wherein determining whether the passenger should be provided with an option includes determining whether the autonomous vehicle is stopped at the pullover location in or within a predetermined distance of an area including certain types of roadway features.
4. The method of clause 3, wherein the certain types of roadway features include an intersection.
5. The method of clause 3 or 4, wherein the certain types of roadway features include a bridge.
6. The method of any of clauses 3-5, wherein the certain types of roadway features include a tunnel.
7. The method of any of clauses 3-6, wherein the certain types of roadway features include railroad tracks.
8. The method of any of clauses 1-7, wherein sending the signal causes the option to be displayed on a display of the autonomous vehicle when the passenger is inside of the autonomous vehicle.
9. The method of any of clauses 1-8, wherein sending the signal causes the option to be displayed on a display of a client computing device of the passenger when the passenger is not inside the autonomous vehicle.
10. A system comprising one or more processors configured to:
   control an autonomous vehicle in an autonomous driving mode to stop at a pullover location;
   determine whether a passenger should be provided with an option to trigger the autonomous vehicle to move from the pullover location to a new pullover location,
   while the autonomous vehicle is stopped at the pullover location and based on the determining, send a signal in order to provide the option to the passenger;
   while the autonomous vehicle is stopped at the pullover location, receive an indication that the passenger has selected the option; and
   in response to receiving the indication, control the autonomous vehicle in the autonomous driving mode to a new pullover location.
11. The system of clause 10, wherein determining whether the passenger should be provided with the option occurs while the autonomous vehicle is stopped at the pullover location.
12. The system of clause 10 or 11, wherein the one or more processors are further configured to determine whether the passenger should be provided with an option by determining whether the autonomous vehicle is stopped at the pullover location in or within a predetermined distance of an area including certain types of roadway features.
13. The system of clause 12, wherein the certain types of roadway features include an intersection.
14. The system of clause 12 or 13, wherein the certain types of roadway features include a bridge.
15. The system of any of clauses 12-14, wherein the certain types of roadway features include a tunnel.
16. The system of any of clauses 12-15, wherein the certain types of roadway features include railroad tracks.
17. The system of any of clauses 10-16, wherein the one or more processors are further configured to send the signal and thereby cause the option to be displayed on a display of the autonomous vehicle when the passenger is inside of the autonomous vehicle.
18. The system of any of clauses 10-17, wherein the one or more processors are further configured to send the signal and thereby cause the option to be displayed on a display of a client computing device of the passenger when the passenger is not inside the autonomous vehicle.
19. The system of any of clauses 10-18, further comprising the autonomous vehicle.
20. Computer-executable instructions which, when executed by one or more processors, cause the one or more processors to perform the method of any of clauses 1-9.
21. A computer-readable medium storing computer-executable instructions which, when executed by one or more processors, cause the one or more processors to perform the method of any of clauses 1-9.

## Claims

1. A method comprising:
controlling, by one or more processors, an autonomous vehicle in an autonomous driving mode to stop at a pullover location;
determining, by the one or more processors, whether a passenger should be provided with an option to trigger the autonomous vehicle to move from the pullover location to a new pullover location,
while the autonomous vehicle is stopped at the pullover location and based on the determining, sending, by the one or more processors, a signal in order to provide the option to the passenger;
while the autonomous vehicle is stopped at the pullover location, receiving, by the one or more processors, an indication that the passenger has selected the option; and
in response to receiving the indication, controlling, by the one or more processors, the autonomous vehicle in the autonomous driving mode to a new pullover location.

2. The method of claim 1, wherein determining whether the passenger should be provided with the option occurs while the autonomous vehicle is stopped at the pullover location.

3. The method of claim 1 or 2, wherein determining whether the passenger should be provided with the option includes determining whether the autonomous vehicle is stopped at the pullover location in or within a predetermined distance of an area including certain types of roadway features.

4. The method of claim 3,
wherein the certain types of roadway features include an intersection; and/or
wherein the certain types of roadway features include a bridge; and/or
wherein the certain types of roadway features include a tunnel; and/or
wherein the certain types of roadway features include railroad tracks.

5. The method of any preceding claim, wherein sending the signal causes the option to be displayed on a display of the autonomous vehicle when the passenger is inside of the autonomous vehicle.

6. The method of any preceding claim, wherein sending the signal causes the option to be displayed on a display of a client computing device of the passenger when the passenger is not inside the autonomous vehicle.

7. A system comprising one or more processors configured to:
control an autonomous vehicle in an autonomous driving mode to stop at a pullover location;
determine whether a passenger should be provided with an option to trigger the autonomous vehicle to move from the pullover location to a new pullover location,
while the autonomous vehicle is stopped at the pullover location and based on the determining, send a signal in order to provide the option to the passenger;
while the autonomous vehicle is stopped at the pullover location, receive an indication that the passenger has selected the option; and
in response to receiving the indication, control the autonomous vehicle in the autonomous driving mode to a new pullover location.

8. The system of claim 7, wherein determining whether the passenger should be provided with the option occurs while the autonomous vehicle is stopped at the pullover location.

9. The system of claim 7 or 8, wherein the one or more processors are further configured to determine whether the passenger should be provided with the option by determining whether the autonomous vehicle is stopped at the pullover location in or within a predetermined distance of an area including certain types of roadway features.

10. The system of claim 9,
wherein the certain types of roadway features include an intersection; and/or
wherein the certain types of roadway features include a bridge; and/or
wherein the certain types of roadway features include a tunnel; and/or
wherein the certain types of roadway features include railroad tracks.

11. The system of any of claims 7-10, wherein the one or more processors are further configured to send the signal and thereby cause the option to be displayed on a display of the autonomous vehicle when the passenger is inside of the autonomous vehicle.

12. The system of any of claims 7-11, wherein the one or more processors are further configured to send the signal and thereby cause the option to be displayed on a display of a client computing device of the passenger when the passenger is not inside the autonomous vehicle.

13. The system of any of claims 7-12, further comprising the autonomous vehicle.

14. Computer-executable instructions which, when executed by one or more processors, cause the one or more processors to perform the method of any of claims 1-6.

15. A computer-readable medium storing computer-executable instructions which, when executed by one or more processors, cause the one or more processors to perform the method of any of claims 1-6.
